(19)

**Europäisches Patentamt**
**European Patent Office**
**Office européen des brevets**

(11) **EP 4 654 679 A1**

(12) **EUROPEAN PATENT APPLICATION**
published in accordance with Art. 153(4) EPC

(43) Date of publication:
**26.11.2025   Bulletin 2025/48**

(21) Application number: **24744208.0**

(22) Date of filing: **15.01.2024**

(51) International Patent Classification (IPC):
***H04W 52/02*** (2009.01)

(52) Cooperative Patent Classification (CPC):
**H04W 24/02; H04W 52/02;** Y02D 30/70

(86) International application number:
**PCT/CN2024/072311**

(87) International publication number:
**WO 2024/153032 (25.07.2024 Gazette 2024/30)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **18.01.2023   CN 202310200207**

(71) Applicant: **Apogee Networks, LLC
Dallas, TX 75201 (US)**

(72) Inventors:
• **LIU, Zheng
  Shanghai 201206 (CN)**
• **ZHANG, Xiaobo
  Shanghai 201206 (CN)**

(74) Representative: **Gunzelmann, Rainer
Wuesthoff & Wuesthoff
Patentanwälte und Rechtsanwalt PartG mbB
Schweigerstraße 2
81541 München (DE)**

(54) **METHOD AND APPARATUS FOR NODE IN WIRELESS COMMUNICATIONS**

(57)    Disclosed in the present application are a method and apparatus for a node in wireless communications. The method comprises: a node receiving a first information block; and the node monitoring a target wake-up signal, the target wake-up signal being used for determining whether to monitor first signaling, and the first information block being used for determining time-frequency resources occupied by means of the target wake-up signal, wherein the target wake-up signal carries a first bit block, which is used for generating a first bit sequence; a first feature sequence is a sequence comprising a plurality of sequentially indexed numerical values, and the products of a plurality of bits comprised in the first bit sequence and corresponding numerical values in the first feature sequence are used for generating a first symbol sequence; the number of symbols comprised in the first symbol sequence is related to the number of time-frequency resources occupied by the target wake-up signal, and the first symbol sequence is subjected to at least transform precoding so as to be used for generating the target wake-up signal. The present application reduces the rate of false detection.

Fig. 1

## Description

### Technical Field

The present application relates to a transmission method and apparatus in a wireless communication system, in particular to a low-power transmission scheme and apparatus in wireless communications.

### Background Art

Application scenarios of wireless communication systems in the future will become more and more diversified, and different application scenarios will put forward different performance requirements for the systems. In order to meet the different performance requirements of various application scenarios, the 3GPP (3rd Generation Partner Project) RAN (Radio Access Network) #72 plenary meeting decided to study the new radio technology (NR) (or 5G), and a WI (Work Item) of the new radio technology (NR) was passed at the 3GPP RAN #75 plenary meeting, and standardization work on NR was started.

In the new radio technology, power consumption is an important indicator to measure technology performance. In order to be able to adapt to various application scenarios and meet different needs, 3GPP has been evolving technologies for reducing power consumption.

### Summary of the Invention

Among various technologies for reducing power consumption, it is considered an effective method to wake up a receiver of user equipment (UE) or a network device (gNB/eNB) in advance through a wake-up signal. In response to a demand for reducing power consumption in an NR system, the present application discloses a solution. It should be noted that in the description of the present application, reducing power consumption is only used as a typical application scenario or example; and the wake-up signal in the present application is also applicable to other scenarios facing similar problems (such as other scenarios that require wake-up in advance, including but not limited to capacity enhancement systems, short-range communication systems, unlicensed frequency domain communications, IoT (Internet of Things), URLLC (Ultra Reliable Low Latency Communication) networks, Internet of Vehicles, etc.), and similar technical effects can also be achieved. In addition, the use of a unified solution for different scenarios (including but not limited to multi-carrier scenarios) can also help reduce hardware complexity and costs. In case of no conflict, embodiments and features in the embodiments in a first node device of the present application can be applied to a second node device, and vice versa. In particular, the interpretation of the terminologies, nouns, functions, and variables in the present application (if not otherwise specified) can refer to the definitions in 3GPP specification protocol TS36 series, TS38 series, and TS37 series.

The present application discloses a method used in a first node for wireless communications, characterized by comprising:

receiving a first information block, and

monitoring a target wake-up signal, the target wake-up signal being used for determining whether to monitor first signaling, the first information block being used for determining a time-frequency resource occupied by the target wake-up signal, and the first signaling carrying control information;

wherein the target wake-up signal carries a first bit block, and the first bit block comprises at least one bit; the first bit block is used for generating a first bit sequence, and the first bit sequence comprises a plurality of sequentially indexed bits; a first feature sequence is a sequence comprising a plurality of sequentially indexed numerical values, and products of the plurality of bits comprised in the first bit sequence and corresponding numerical values in the first feature sequence are used for generating a first symbol sequence; and the number of symbols comprised in the first symbol sequence is related to the number of time-frequency resources occupied by the target wake-up signal, and the first symbol sequence is subjected to at least transform precoding so as to be used for generating the target wake-up signal.

As one embodiment, introduction of the first feature sequence supports double wake-up confirmation, reduces the probability of false wake-up, and reduces power consumption.

As one embodiment, the products of the multiple bits comprised in the first bit sequence and corresponding elements in the first feature sequence are used for generating the first symbol sequence, thereby supporting a long feature sequence, enhancing sequence correlation, and improving the accuracy of wake-up.

According to one aspect of the present application, the above method is characterized in that bits in the first bit sequence and numerical values in the first feature sequence are in one-to-one correspondence, or bits in the first bit sequence with a bit value equal to "1" and the numerical values in the first feature sequence are in one-to-one correspondence.

According to one aspect of the present application, the above method is characterized in that the first bit block is subjected to at least feature encoding and bit repetition so as to be used for generating the first bit sequence; the feature encoding encodes bits with the bit value equal to "1" into "10" and encodes bits with a bit value equal to "0" into "01", or the feature encoding encodes the bits with a bit value equal to "1" into "01" and encodes bits with a bit value equal to "0" into "10"; and the number of repetition of the bit repetition is related to the number of symbols comprised in the first symbol sequence.

According to one aspect of the present application, the above method is characterized in that an identity of the first node is used for determining a first occasion, and whether the target wake-up signal carries an indication of a device group to which the first node belongs is used for determining whether to monitor the first signaling in the first occasion; and the target wake-up signal is earlier than the first occasion in a time domain.

According to one aspect of the present application, the above method is characterized by comprising:

sending a second information block,
wherein the second information block is used for indicating at least one band, and the first node supports reception of a wake-up signal on each band indicated by the second information block.

As one embodiment, the second information block indicates that the reception of a wake-up signal is supported on each band, such that the performance of a receiver can be considered more flexibly, and the configuration and reception performance of the wake-up signal can be optimized.

According to one aspect of the present application, the above method is characterized by comprising:

determining whether to monitor second signaling;
wherein the second signaling is used for indicating whether to monitor the first signaling; and the target wake-up signal is used for determining whether to monitor the second signaling.

According to one aspect of the present application, the above method is characterized in that the target wake-up signal is one of W1 wake-up signals, the number of wake-up signals carrying a device group comprising the first node in the W1 wake-up signals is used for determining whether to monitor the first signaling, and the W1 is a positive integer greater than 1.

The present application discloses a method used in a second node for wireless communications, characterized by comprising:

sending a first information block;
and sending a target wake-up signal, the target wake-up signal being used for determining whether to monitor first signaling, the first information block being used for determining a time-frequency resource occupied by the target wake-up signal, and the first signaling carrying control information;
wherein the target wake-up signal carries a first bit block, and the first bit block comprises at least one bit; the first bit block is used for generating a first bit sequence, and the first bit sequence comprises a plurality of sequentially indexed bits; a first feature sequence is a sequence comprising a plurality of sequentially indexed numerical values, and products of the plurality of bits comprised in the first bit sequence and corresponding numerical values in the first feature sequence are used for generating a first symbol sequence; and the number of symbols comprised in the first symbol sequence is related to the number of time-frequency resources occupied by the target wake-up signal, and the first symbol sequence is subjected to at least transform precoding so as to be used for generating the target wake-up signal.

According to one aspect of the present application, the above method is characterized in that bits in the first bit sequence and numerical values in the first feature sequence are in one-to-one correspondence, or bits in the first bit sequence with a bit value equal to "1" and the numerical values in the first feature sequence are in one-to-one correspondence.

According to one aspect of the present application, the above method is characterized in that the first bit block is subjected to at least feature encoding and bit repetition so as to be used for generating the first bit sequence; the feature encoding encodes bits with the bit value equal to "1" into "10" and encodes bits with a bit value equal to "0" into "01", or the feature encoding encodes the bits with a bit value equal to "1" into "01" and encodes bits with a bit value equal to "0" into "10"; and the number of repetition of the bit repetition is related to the number of symbols comprised in the first symbol sequence.

According to one aspect of the present application, the above method is characterized in that an identity of a monitor of the target wake-up signal is used for determining a first occasion, and whether the target wake-up signal carries an indication of a device group to which the monitor of the target wake-up signal belongs is used for determining whether to monitor the first signaling in the first occasion; and the target wake-up signal is earlier than the first occasion in a time domain.

According to one aspect of the present application, the above method is characterized by comprising:

receiving a second information block;
wherein the second information block is used for indicating at least one band, and a monitor of the target wake-up signal supports reception of a wake-up signal on each band indicated by the second information block.

According to one aspect of the present application, the above method is characterized by comprising:

sending second signaling;
wherein the second signaling is used for indicating whether to monitor the first signaling; and the target wake-up signal is used for determining whether to monitor the second signaling.

According to one aspect of the present application, the above method is characterized in that the target wake-up signal is one of W1 wake-up signals, the number of wake-up signals of a device group comprising a monitor of the target wake-up signal in the W1 wake-up signals is used for determining whether to monitor the first signaling, and the W1 is a positive integer greater than 1.

The present application discloses a first node device used in wireless communications, characterized by comprising:

a first transceiver for receiving a first information block; and
a first receiver for monitoring a target wake-up signal, the target wake-up signal being used for determining whether to monitor first signaling, the first information block being used for determining a time-frequency resource occupied by the target wake-up signal, and the first signaling carrying control information;
wherein the target wake-up signal carries a first bit block, and the first bit block comprises at least one bit; the first bit block is used for generating a first bit sequence, and the first bit sequence comprises a plurality of sequentially indexed bits; a first feature sequence is a sequence comprising a plurality of sequentially indexed numerical values, and products of the plurality of bits comprised in the first bit sequence and corresponding numerical values in the first feature sequence are used for generating a first symbol sequence; and the number of symbols comprised in the first symbol sequence is related to the number of time-frequency resources occupied by the target wake-up signal, and the first symbol sequence is subjected to at least transform precoding so as to be used for generating the target wake-up signal.

The present application discloses a second node device for wireless communications, characterized by comprising:

a second transceiver for sending a first information block;
and a first transmitter for sending a target wake-up signal, the target wake-up signal being used for determining whether to monitor first signaling, the first information block being used for determining time-frequency resources occupied by the target wake-up signal, and the first signaling carrying control information;
wherein the target wake-up signal carries a first bit block, and the first bit block comprises at least one bit; the first bit block is used for generating a first bit sequence, and the first bit sequence comprises a plurality of sequentially indexed bits; a first feature sequence is a sequence comprising a plurality of sequentially indexed numerical values, and products of the plurality of bits comprised in the first bit sequence and corresponding numerical values in the first feature sequence are used for generating a first symbol sequence; and the number of symbols comprised in the first symbol sequence is related to the number of time-frequency resources occupied by the target wake-up signal, and the first symbol sequence is subjected to at least transform precoding so as to be used for generating the target wake-up signal.

## Brief description of the drawings

Other features, purposes and advantages of the present application will become more apparent by reading the detailed description of the non-limiting embodiments in the following drawings with reference to them:

FIG. 1 shows a flowchart of a first information block and a target wake-up signal according to one embodiment of the present application;

FIG. 2 shows a schematic diagram of a network architecture according to one embodiment of the present application;
FIG. 3 shows a schematic diagram of a wireless protocol architecture of a user plane and a control plane according to one embodiment of the present application;
FIG. 4 shows a schematic diagram of a first node device and a second node device according to one embodiment of the present application;
FIG. 5 shows a flow chart of wireless signal transmission according to one embodiment of the present application;
FIG. 6 shows another flow chart of wireless signal transmission according to one embodiment of the present application;
FIG. 7 shows a schematic diagram of a relationship between a first bit sequence and a first feature sequence according to one embodiment of the present application;
FIG. 8 shows a schematic diagram of feature coding and bit repetition according to one embodiment of the present application;
FIG. 9 shows a schematic diagram of a relationship between a target wake-up signal and a first occasion according to one embodiment of the present application;
FIG. 10 shows a schematic diagram of a relationship between second signaling and first signaling according to one embodiment of the present application;
FIG. 11 shows a schematic diagram of a relationship between W1 wake-up signals and first signaling according to one embodiment of the present application;
FIG. 12 shows a structural block diagram of a processing device in a first node device according to one embodiment of the present application; and
FIG. 13 shows a structural block diagram of a processing device in a second node device according to one embodiment of the present application.

## Detailed Description of Embodiments

The technical solution of the present application will be further described in detail below in conjunction with the accompanying drawings. It should be noted that, in case of no conflict, embodiments and features in the embodiments of the present application can be arbitrarily combined with each other.

## Embodiment 1

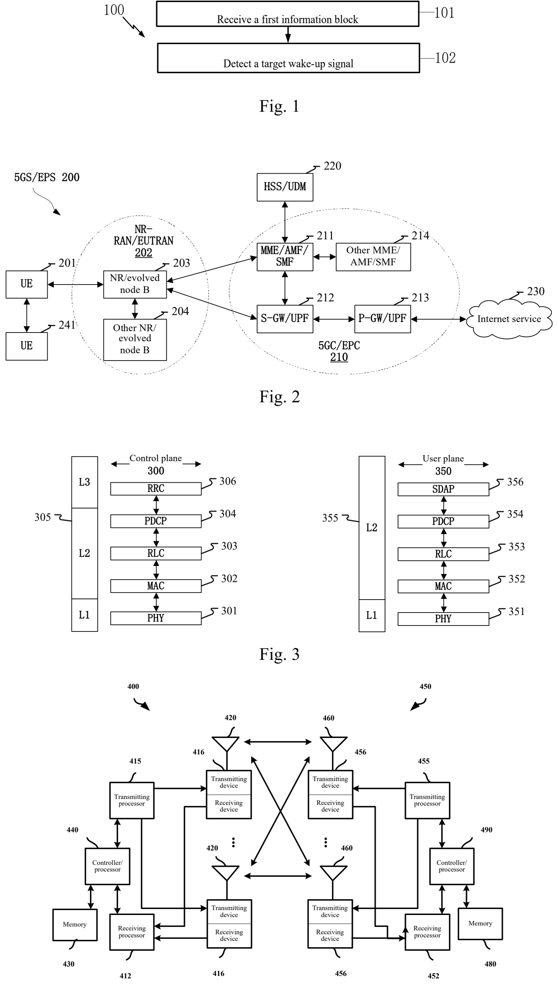

Embodiment 1 illustrates a flow chart 100 of a first information block and a target wake-up signal according to one embodiment of the present application, as shown in FIG. 1. In FIG. 1, each block represents one step. It is particularly needed to emphasize that the order of various blocks in the figure does not limit a temporal order of the steps represented.

In Embodiment 1, a first node device in the present application receives the first information block in step 101; the first node device in the present application monitors a target wake-up signal in step 102, the target wake-up signal is used for determining whether to monitor first signaling, the first information block is used for determining time-frequency resources occupied by the target wake-up signal, and the first signaling carries control information; the target wake-up signal carries a first bit block, and the first bit block comprises at least one bit; the first bit block is used for generating a first bit sequence, and the first bit sequence comprises a plurality of sequentially indexed bits; a first feature sequence is a sequence comprising a plurality of sequentially indexed numerical values, and products of the plurality of bits comprised in the first bit sequence and corresponding numerical values in the first feature sequence are used for generating a first symbol sequence; and the number of symbols comprised in the first symbol sequence is related to the number of time-frequency resources occupied by the target wake-up signal, and the first symbol sequence is subjected to at least transform precoding so as to be used for generating the target wake-up signal.

As one embodiment, the first information block is transmitted through an air interface or a wireless interface.

As one embodiment, the first information block comprises all or part of one piece of high-layer signaling or one piece of physical layer signaling.

As one embodiment, the first information block comprises all or part of one piece of RRC (Radio Resource Control) layer signaling, or the first information block comprises all or part of one piece of MAC (Medium Access Control) layer signaling.

As one embodiment, the first information block comprises all or part of one system information block (SIB).

As one embodiment, the first information block comprises all or part of one SIB1.

As one embodiment, the first information block is user equipment-specific (UE-specific), or the first information block is cell-specific.

As one embodiment, the first information block is configured per carrier, or the first information block is configured per BWP (bandwidth part), or the first information block is configured per band or per frequency range (FR).

As one embodiment, the first information block comprises all or part of fields in a DCI (Downlink Control Information) format.

As one embodiment, the first information block comprises all or part of an IE (Information Element) "PCCH-Config"; or the first information block comprises all or part of an IE "DownlinkConfigCommonSIB"; or the first information block comprises all or part of an IE "WUS-Config-r19"; or the first information block comprises all or part of an IE "LPWUS-Config-r19"; or the first information block comprises all or part of an IE "WUS-Config"; or the first information block comprises all or part of an IE "LPWUS-Config".

As one embodiment, the first information block comprises all or part of paging configuration information.

As one embodiment, the first information block comprises all or part of downlink common configuration information.

As one embodiment, the first information block comprises all or part of wake-up signal configuration information.

As one embodiment, the technical feature of "the first information block is used for determining time-frequency resources occupied by the target wake-up signal" comprises the following meaning: the first information block is used by the first node device in the present application for determining the time-frequency resources occupied by the target wake-up signal.

As one embodiment, the technical feature of "the first information block is used for determining time-frequency resources occupied by the target wake-up signal" comprises the following meaning: all or part comprised in the first information block is used for explicitly or implicitly indicating the time-frequency resources occupied by the target wake-up signal.

As one embodiment, the technical feature of "the first information block is used for determining time-frequency resources occupied by the target wake-up signal" comprises the following meaning: all or part comprised in the first information block is used for explicitly or implicitly indicating at least one RB (Resource Block) occupied by the target wake-up signal in a frequency domain.

As one embodiment, the technical feature of "the first information block is used for determining time-frequency resources occupied by the target wake-up signal" comprises the following meaning: all or part comprised in the first information block is used for explicitly or implicitly indicating at least one symbol occupied by the target wake-up signal in a time domain.

As one embodiment, the technical feature of "the first information block is used for determining time-frequency resources occupied by the target wake-up signal" comprises the following meaning: all or part comprised in the first information block is used for explicitly or implicitly indicating at least one subcarrier occupied by the target wake-up signal in a frequency domain.

As one embodiment, the technical feature of "the first information block is used for determining time-frequency resources occupied by the target wake-up signal" comprises the following meaning: all or part comprised in the first information block is used for explicitly or implicitly indicating at least one slot occupied by the target wake-up signal in a time domain.

As one embodiment, the technical feature of "the first information block is used for determining time-frequency resources occupied by the target wake-up signal" comprises the following meaning: the first information block is used for determining the number (or size) of the time-frequency resources occupied by the target wake-up signal.

As one embodiment, the technical feature of "the first information block is used for determining time-frequency resources occupied by the target wake-up signal" comprises the following meaning: the first information block is used for determining one or both of the number (or size) of the time-frequency resources occupied by the target wake-up signal or a time-frequency domain position of the time-frequency resources occupied by the target wake-up signal.

As one embodiment, time-frequency resources occupied by the target wake-up signal are time-frequency resources to which the target wake-up signal is resource mapped.

As one embodiment, time-frequency resources occupied by the target wake-up signal are time-frequency resources used to transmit the target wake-up signal.

As one embodiment, time-frequency resources occupied by the target wake-up signal are time-frequency resources allocated to the target wake-up signal.

As one embodiment, time-frequency resources occupied by the target wake-up signal are time-frequency resources allocated for the target wake-up signal.

As one embodiment, time-frequency resources occupied by the target wake-up signal are REs allocated for the target wake-up signal.

As one embodiment, time-frequency resources occupied by the target wake-up signal comprise time domain symbols allocated to the target wake-up signal in a time domain.

As one embodiment, time-frequency resources occupied by the target wake-up signal comprise resource blocks (RBs) allocated for the target wake-up signal in a frequency domain.

As one embodiment, time-frequency resources occupied by the target wake-up signal comprise subcarriers allocated for the target wake-up signal in a frequency domain.

As one embodiment, time-frequency resources occupied by the target wake-up signal comprise guard resources for the target wake-up signal.

As one embodiment, time-frequency resources occupied by the target wake-up signal do not comprise guard resources for the target wake-up signal.

As one embodiment, time-frequency resources occupied by the target wake-up signal comprise blank resources allocated for the target wake-up signal.

As one embodiment, time-frequency resources occupied by the target wake-up signal do not comprise blank resources.

As one embodiment, time-frequency resources occupied by the target wake-up signal comprise guard gaps allocated for the target wake-up signal in a frequency domain.

As one embodiment, time-frequency resources occupied by the target wake-up signal comprise gaps allocated for the target wake-up signal in a time domain.

As one embodiment, time-frequency resources occupied by the target wake-up signal are time-frequency resources to which the target wake-up signal is actually resource mapped.

As one embodiment, time-frequency resources occupied by the target wake-up signal comprise time-frequency resources to which the target wake-up signal is not resource mapped.

As one embodiment, the first information block is also used for determining sequence resources used by the target wake-up signal.

As one embodiment, the first information block is also used for determining the number of all or part of the information bits carried by the target wake-up signal.

As one embodiment, the first information block is also used for determining a parameter value of the number of bits comprised in at least one domain carried by the target wake-up signal.

As one embodiment, the first information block is also used for determining a parameter value of the number of all or part of fields carried by the target wake-up signal.

As one embodiment, the first information block is also used for determining a parameter value of a format used by the target wake-up signal.

As one embodiment, the first information block is also used for indicating a parameter value of monitoring of a PEI (Paging Early Indication).

As one embodiment, the first information block is also used for indicating a parameter value of monitoring of a PDCCH with PS-RNTI scrambled CRC.

As one embodiment, the first information block is also used for determining a generation method of the target wake-up signal.

As one embodiment, the first information block is also used for determining a type of the target wake-up signal.

As one embodiment, the first information block is also used for determining a modulation method (OOK or FSK) used by the target wake-up signal.

As one embodiment, the target wake-up signal is a low power wake up signal (LPWUS).

As one embodiment, the target wake-up signal is a square wave signal.

As one embodiment, the target wake-up signal is a frequency modulated signal.

As one embodiment, the target wake-up signal is a signal using OOK (On/Off Keying).

As one embodiment, the target wake-up signal is a signal using FSK (Frequency Shift Keying).

As one embodiment, the target wake-up signal is a signal using OOK and constant envelope sequences.

As one embodiment, the target wake-up signal is a signal using FSK and constant envelope sequences.

As one embodiment, the target wake-up signal is a signal for waking up a baseband processing function of a receiver.

As one embodiment, the target wake-up signal is a signal for waking up a complete baseband processing function of a receiver.

As one embodiment, the target wake-up signal is a signal for waking up monitoring or reception of a PDCCH (Physical Downlink Control Channel).

As one embodiment, the target wake-up signal is a baseband signal or a radio frequency signal.

As one embodiment, the target wake-up signal is generated by OFDM.

As one embodiment, the target wake-up signal is used for reducing power consumption.

As one embodiment, the target wake-up signal is used in an RRC (Radio Resource Control) idle state or an RRC inactive state.

As one embodiment, the target wake-up signal can be used in the RRC (Radio Resource Control) idle state, the RRC inactive state and an RRC connected state.

As one embodiment, the monitoring of the target wake-up signal is implemented at a radio frequency.

As one embodiment, the monitoring of the target wake-up signal is implemented at an intermediate frequency.

As one embodiment, the monitoring of the target wake-up signal is implemented in a baseband.

As one embodiment, the monitoring of the target wake-up signal is implemented by envelope detection.

As one embodiment, the monitoring of the target wake-up signal is implemented by correlation.

As one embodiment, the monitoring of the target wake-up signal is implemented by energy detection.

As one embodiment, the monitoring of the target wake-up signal is implemented by envelope detection and decoding.

As one embodiment, the monitoring of the target wake-up signal is implemented by envelope detection and correlation.

As one embodiment, the monitoring of the target wake-up signal is implemented by conversion from frequency modulation (FM) to amplitude modulation (AM) and envelope detection.

As one embodiment, a monitoring method of the target wake-up signal is implementation-related.

As one embodiment, a receiver used for monitoring of the target wake-up signal is implementation-related.

As one embodiment, the monitoring of the target wake-up signal is related to the capability of the first node device.

As one embodiment, the first signaling is a PDCCH.

As one embodiment, the first signaling is a paging PDCCH.

As one embodiment, the first signaling comprises all or part of fields in a paging DCI format.

As one embodiment, the first signaling is a PDCCH with P-RNTI scrambled CRC.

As one embodiment, the first signaling is a PDCCH with PEI-RNTI scrambled CRC.

As one embodiment, the first signaling is a PDCCH with PS-RNTI scrambled CRC.

As one embodiment, the first signaling carries high-layer information.

As one embodiment, the first signaling carries physical layer information.

As one embodiment, the first signaling carries core network information.

As one embodiment, control information carried by the first signaling is downlink control information (DCI).

As one embodiment, control information carried by the first signaling comprises all or part of fields in one DCI format.

As one embodiment, control information carried by the first signaling comprises all or part of fields in a DCI format 1_0.

As one embodiment, control information carried by the first signaling comprises all or part of fields in a DCI format 2_6.

As one embodiment, control information carried by the first signaling comprises all or part of fields in a DCI format 2_7.

As one embodiment, the technical feature of "control information carried by the first signaling" comprises the following meaning: the first signaling is used for transmission of control information.

As one embodiment, the technical feature of "control information carried by the first signaling" comprises the following meaning: the control information is transmitted through the first signaling.

As one embodiment, the technical feature of "control information carried by the first signaling" comprises the following meaning: the control information is used for generating a channel used by the first signaling.

As one embodiment, the technical feature of "control information carried by the first signaling" comprises the following meaning: the first signaling comprises the control information.

As one embodiment, the technical feature of "control information carried by the first signaling" comprises the following meaning: information bits comprised in the first signaling comprise at least one bit indicating the control information.

As one embodiment, the technical feature of "control information carried by the first signaling" comprises the following meaning: a bit block used for generating the first signaling comprises at least one bit indicating the control information and used for transmission of the control information.

As one embodiment, the two expressions of "monitoring first signaling" and "receiving information carried by the first signaling" are equivalent or can be used interchangeably.

As one embodiment, the two expressions of "monitoring first signaling" and "monitoring PDCCH candidates that may carry the first signaling" are equivalent or can be used interchangeably.

As one embodiment, the two expressions of "monitoring first signaling" and "monitoring PDCCH candidates for the first signaling" are equivalent or can be used interchangeably.

As one embodiment, the two expressions of "monitoring first signaling" and "decoding the first signaling" are equivalent or can be used interchangeably.

As one embodiment, the two expressions of "monitoring first signaling" and "blindly decoding the first signaling" are equivalent or can be used interchangeably.

As one embodiment, the two expressions of "monitoring first signaling" and "performing decoding and CRC on the first signaling" are equivalent or can be used interchangeably.

As one embodiment, the two expressions of "monitoring first signaling" and "performing decoding and RNTI (Radio Network Temporary Identity) scrambled CRC on the first signaling" are equivalent or can be used interchangeably.

As one embodiment, the two expressions of "monitoring first signaling" and "decoding the first signaling for one or more DCI (Downlink Control Information) format(s))" are equivalent or can be used interchangeably.

As one embodiment, the two expressions of "monitoring first signaling" and "decoding the first signaling for one or more DCI payload sizes" are equivalent or can be used interchangeably.

As one embodiment, the technical feature of "the target wake-up signal is used for determining whether to monitor first signaling" comprises the following meaning: the target wake-up signal is used by the first node device in the present application for determining whether to monitor the first signaling.

As one embodiment, the technical feature of "the target wake-up signal is used for determining whether to monitor first signaling" comprises the following meaning: the target wake-up signal is used for determining whether to monitor the first signaling in the first occasion in the present application.

As one embodiment, the technical feature of "the target wake-up signal is used for determining whether to monitor first signaling" comprises the following meaning: the target wake-up signal is used for whether to wake up monitoring for the first signaling.

As one embodiment, the technical feature of "the target wake-up signal is used for determining whether to monitor first signaling" comprises the following meaning: the target wake-up signal is used for determining whether to monitor the second signaling in the present application, and the second signaling is used for indicating whether to monitor the first signaling.

As one embodiment, the technical feature of "the target wake-up signal is used for determining whether to monitor first signaling" comprises the following meaning: the number of wake-up signals carrying a device group comprising the first node device in the W1 wake-up signals in the present application is used for determining whether to monitor the first signaling.

As one embodiment, the technical feature of "the target wake-up signal is used for determining whether to monitor first signaling" comprises the following meaning: whether the target wake-up signal carries an identity (or index) of a device group comprising the first node device is used for determining whether to monitor the first signaling.

As one embodiment, the technical feature of "the target wake-up signal is used for determining whether to monitor first signaling" comprises the following meaning: whether the target wake-up signal carries an identity (or index) of the first node device is used for determining whether to monitor the first signaling.

As one embodiment, the technical feature of "the target wake-up signal is used for determining whether to monitor first signaling" comprises the following meaning: whether the target wake-up signal is detected is used for determining whether to monitor the first signaling.

As one embodiment, the technical feature of "the target wake-up signal is used for determining whether to monitor first signaling" comprises the following meaning: the target wake-up signal is used for determining whether it is required to monitor the first signaling.

As one embodiment, the technical feature of "the target wake-up signal is used for determining whether to monitor first signaling" comprises the following meaning: whether the target wake-up signal is detected and when it is detected, whether the target wake-up signal carries an identity (or index) of a device group comprising the first node device are used for determining whether to monitor the first signaling.

As one embodiment, the technical feature of "the target wake-up signal is used for determining whether to monitor first signaling" comprises the following meanings: when the target wake-up signal is not detected, the first node device abandons monitoring (or is not required to monitor) the first signaling; when the target wake-up signal is detected but the target wake-up signal does not carry an identity (or index) of a device group comprising the first node device, the first node device abandons monitoring (or is not required to monitor) the first signaling; and when the target wake-up signal is detected and the target wake-up signal carries an identity (or index) of a device group comprising the first node device, the first node device monitors (or is required to monitor) the first signaling.

As one embodiment, the technical feature of "the target wake-up signal is used for determining whether to monitor first signaling" comprises the following meanings: when the target wake-up signal is detected and the target wake-up signal carries an identity (or index) of a device group comprising the first node device, the first node device monitors (or is required to monitor) the first signaling; otherwise, the first node device abandons monitoring (or is not required to monitor) the first signaling.

As one embodiment, the technical feature of "the target wake-up signal is used for determining whether to monitor first signaling" comprises the following meaning: the target wake-up signal and other signaling or signals are used together for determining whether to monitor the first signaling.

As one embodiment, one wake-up signal being detected means that information carried by the wake-up signal is correctly received.

As one embodiment, one wake-up signal being detected means that information bits carried by the wake-up signal are correctly decoded.

As one embodiment, one wake-up signal being detected means that energy detection for the wake-up signal exceeds one configured or predefined threshold.

As one embodiment, one wake-up signal being detected means that a power value of envelope detection for the wake-up signal exceeds one configured or predefined threshold.

As one embodiment, one wake-up signal being detected means that a correlation peak of correlation detection for the wake-up signal exceeds one configured or predefined threshold.

As one embodiment, one wake-up signal being detected means that CRC for bits carried by the wake-up signal is passed.

As one embodiment, one wake-up signal being not detected means that no wake-up signal is detected on time-frequency resources allocated to the wake-up signal.

As one embodiment, one wake-up signal being not detected means that no wake-up signal is detected on time-frequency resources and sequence resources allocated to the wake-up signal.

As one embodiment, one wake-up signal being not detected means that information carried by the wake-up signal is not correctly decoded.

As one embodiment, one wake-up signal being not detected means that energy detection on resources allocated to the wake-up signal does not exceed one configured or predefined threshold.

As one embodiment, one wake-up signal being not detected means that a power value of envelope detection for the wake-up signal does not exceed one configured or predefined threshold.

As one embodiment, one wake-up signal being not detected means that a correlation peak of correlation detection for the wake-up signal does not exceed one configured or predefined threshold.

As one embodiment, one wake-up signal being not detected means that CRC for bits carried by the wake-up signal is not passed.

As one embodiment, a criterion for judging whether one wake-up signal is detected is implementation-related.

As one embodiment, a criterion for judging whether one wake-up signal is detected does not need to be defined by a standard protocol.

As one embodiment, whether one wake-up signal is detected is implementation-related.

As one embodiment, whether one wake-up signal is detected is implementation-related when a corresponding requirement is met.

As one embodiment, whether one wake-up signal is detected is implementation-related, and detection of the wake-up signal satisfies at least one of three requirements: corresponding miss detection probability/rate, false detection probability/rate, and false alarm probability/rate.

As one embodiment, the first bit block only comprises 1 bit.

As one embodiment, the first bit block comprises multiple bits.

As one embodiment, each bit comprised in the first bit block is an information bit.

As one embodiment, the first bit block comprises information bits and bits other than information bits.

As one embodiment, the first bit block comprises CRC bits.

As one embodiment, the first bit block comprises padding bits.

As one embodiment, the first bit block comprises all or part of information bits carried by the target wake-up signal.

As one embodiment, the first bit block comprises high-layer information.

As one embodiment, the first bit block comprises physical layer information.

As one embodiment, the first bit block comprises information of a core network (CN).

As one embodiment, the first bit block comprises information of a radio access network (RAN).

As one embodiment, the first bit block comprises all or part of bits for indicating an identity (or index) of a device group.

As one embodiment, the first bit block comprises all or part of bits for indicating an identity of user equipment.

As one embodiment, the first bit block comprises all or part of bits for indicating an RNTI or 5G-S-TMSI (SAE Temporary Mobile Station Identifier) of user equipment.

As one embodiment, the first bit block comprises all or part of bits for indicating an identity or index of at least one user equipment subgroup.

As one embodiment, the technical feature of "the target wake-up signal carries a first bit block" comprises the following meaning: the target wake-up signal carries all or part of bits in the first bit block.

As one embodiment, the technical feature of "the target wake-up signal carries a first bit block" comprises the following meaning: the target wake-up signal is used for transmission of all or part of bits in the first bit block.

As one embodiment, the technical feature of "the target wake-up signal carries a first bit block" comprises the following meaning: all or part of bits in the first bit block are used for generating the target wake-up signal.

As one embodiment, the technical feature of "the target wake-up signal carries a first bit block" comprises the following meaning: all or part of bits in the first bit block are transmitted through the target wake-up signal.

As one embodiment, the technical feature of "the target wake-up signal carries a first bit block" comprises the following meaning: all or part of bits in the first bit block generate a modulation symbol of the target wake-up signal.

As one embodiment, the technical feature of "the target wake-up signal carries a first bit block" comprises the following meaning: information bits for generating the target wake-up signal comprise all or part of bits in the first bit block.

As one embodiment, the technical feature of "the target wake-up signal carries a first bit block" comprises the following meaning: all or part of bits in the first bit block are mapped to the target wake-up signal.

As one embodiment, the technical feature of "the target wake-up signal carries a first bit block" comprises the following meaning: all or part of bits in the first bit block are mapped to resources occupied by the target wake-up signal.

As one embodiment, the technical feature of "the target wake-up signal carries a first bit block" comprises the following meaning: the first bit block comprises all or part of fields in an information format carried by the target wake-up signal.

As one embodiment, the first bit sequence is the first bit block.

As one embodiment, the first bit block is composed of some bits in the first bit sequence.

As one embodiment, any one bit in the first bit sequence belongs to the first bit sequence.

As one embodiment, there is one bit in the first bit sequence that is a bit outside the first bit sequence.

As one embodiment, the first bit sequence is a bit sequence obtained by processing or transforming the first bit block.

As one embodiment, the number of bits comprised in the first bit sequence is greater than the number of bits comprised in the first bit block.

As one embodiment, the number of bits comprised in the first bit sequence is equal to the number of bits comprised in the first bit block.

As one embodiment, the number of bits comprised in the first bit sequence is smaller than the number of bits comprised in the first bit block.

As one embodiment, all bits in the first bit sequence are sequentially indexed.

As one embodiment, the first bit sequence comprises a plurality of bits sequentially indexed starting from 0.

As one embodiment, the first bit sequence comprises a plurality of bits indexed by 0, 1, 2...

As one embodiment, the first bit sequence comprises a plurality of bits sequentially indexed starting from 1.

As one embodiment, the first bit sequence comprises a plurality of bits indexed by 1, 2, 3...

As one embodiment, an index of any one bit in the first bit sequence is a non-negative integer.

As one embodiment, an index of any one bit in the first bit sequence is a positive integer.

As one embodiment, the technical feature of "the first bit block is used for generating a first bit sequence" comprises the following meaning: the first bit block is used by the second node device in the present application for generating the first bit sequence.

As one embodiment, the technical feature of "the first bit block is used for generating the first bit sequence" comprises the following meaning: the first node device in the present application assumes or expects or believes that the first bit block is used for generating the first bit sequence.

As one embodiment, the technical feature of "the first bit block is used for generating the first bit sequence" comprises the following meaning: the first bit block is subjected to at least oversampling so as to be used for generating the first bit sequence.

As one embodiment, the technical feature of "the first bit block is used for generating the first bit sequence" comprises the following meaning: the first bit block is subjected to at least repetition so as to be used for generating the first bit sequence.

As one embodiment, the technical feature of "the first bit block is used for generating the first bit sequence" comprises the following meaning: the first bit block is subjected to at least feature encoding and bit repetition in the present application so as to be used for generating the first bit sequence.

As one embodiment, the technical feature of "the first bit block is used for generating the first bit sequence" comprises the following meaning: the first bit block is subjected to at least extension/spreading so as to be used for generating the first bit sequence.

As one embodiment, the technical feature of "the first bit block is used for generating the first bit sequence" comprises the following meaning: the first bit block is subjected to at least channel coding so as to be used for generating the first bit sequence.

As one embodiment, the technical feature of "the first bit block is used for generating the first bit sequence" comprises the following meaning: the first bit block is subjected to at least Fourier transform or inverse Fourier transform so as to be used for generating the first bit sequence.

As one embodiment, the technical feature of "the first bit block is used for generating the first bit sequence" comprises the following meaning: the first bit block is subjected to at least block repetition so as to be used for generating the first bit sequence.

As one embodiment, the technical feature of "the first bit block is used for generating the first bit sequence" comprises the following meaning: the first bit block is subjected to at least rate matching so as to be used for generating the first bit sequence.

As one embodiment, the technical feature of "the first bit block is used for generating the first bit sequence" comprises the following meaning: the first bit block is subjected to at least concatenation of multiple first bit blocks so as to be used for generating the first bit sequence.

As one embodiment, the technical feature of "the first bit block is used for generating the first bit sequence" comprises the following meaning: each bit in the first bit block is subjected to continuous repetition to generate a bit fragment in the first bit sequence.

As one embodiment, the technical feature of "the first bit block is used for generating the first bit sequence" comprises the following meaning: the first bit block is subjected to at least coding so as to be used for generating the first bit sequence.

As one embodiment, the technical feature of "the first bit block is used for generating the first bit sequence" comprises the following meaning: the first bit block is subjected to at least Manchester coding so as to be used for generating the first bit sequence.

As one embodiment, the technical feature of "the first bit block is used for generating the first bit sequence" comprises the following meaning: the first bit block is subjected to at least truncation or shortening so as to be used for generating the first bit sequence.

As one embodiment, the technical feature of "the first bit block is used for generating the first bit sequence" comprises the following meaning: the first bit block is subjected to at least padding so as to be used for generating the first bit sequence.

As one embodiment, all or part of bits comprised in the first bit block are used for determining or generating the first feature sequence.

As one embodiment, all or part of bits comprised in the first bit block are used for determining a value of at least one parameter of the first feature sequence.

As one embodiment, an identity (ID) or index of the first node device is used for determining or generating the first feature sequence.

As one embodiment, an identity (ID) or index of the first node device is used for determining a value of at least one parameter of the first feature sequence.

As one embodiment, a cell identity (ID) or index is used for determining or generating the first feature sequence.

As one embodiment, a cell identity (ID) or index is used for determining a value of at least one parameter of the first feature sequence.

As one embodiment, time domain positions of time-frequency resources occupied by the target wake-up signal are used for determining a value of at least one parameter of the first feature sequence.

As one embodiment, frequency domain positions of time-frequency resources occupied by the target wake-up signal are used for determining a value of at least one parameter of the first feature sequence.

As one embodiment, an ID or index of one device group to which the first node device belongs is used for determining a value of at least one parameter of the first feature sequence.

As one embodiment, a paging occasion (PO) associated with the target wake-up signal is used for determining a value of at least one parameter of the first feature sequence.

As one embodiment, the first occasion in the present application is used for determining a value of at least one parameter of the first feature sequence.

As one embodiment, the first information block is used for determining a value of at least one parameter of the first feature sequence.

As one embodiment, an information block other than the first information block is used for determining a value of at least one parameter of the first feature sequence.

As one embodiment, a value of at least one parameter of the first feature sequence is predefined or configured.

As one embodiment, one parameter of the first feature sequence is a generation parameter or an initialization parameter of the first feature sequence.

As one embodiment, the first feature sequence is a constant envelope (constant envelope/amplitude) sequence.

As one embodiment, the first feature sequence is a constant envelope autocorrelation (CAZAC, Constant Amplitude Zero Auto Correlation) sequence.

As one embodiment, the first feature sequence is a Walsh code sequence.

As one embodiment, the first feature sequence is a Zadoff-Chu (ZC) sequence.

As one embodiment, the first feature sequence is a pseudo-random sequence.

As one embodiment, the first feature sequence is an m-sequence.

As one embodiment, the first feature sequence is a Gold sequence.

As one embodiment, the first feature sequence is a low peak-to-average ratio (low PAPR) sequence.

As one embodiment, the first feature sequence is a CGS (computer generation sequence).

As one embodiment, the first feature sequence is an orthogonal code sequence.

As one embodiment, the first feature sequence is composed of bits.

As one embodiment, the first feature sequence is composed of complex numbers.

As one embodiment, the first feature sequence is composed of complex numbers with equal modulus values.

As one embodiment, the first feature sequence is composed of modulation symbols of a pseudo-random sequence subjected to modulation.

As one embodiment, the first feature sequence is composed of modulation symbols of a pseudo-random sequence subjected to QPSK or BPSK modulation.

As one embodiment, the first feature sequence is composed of modulation symbols of one bit sequence subjected to QPSK or BPSK modulation.

As one embodiment, the first feature sequence is composed of complex number values of one bit sequence subjected to operation by the following formula:

$$r(n) = \frac{1}{\sqrt{2}}(1 - 2 \cdot c(2n)) + j\frac{1}{\sqrt{2}}(1 - 2 \cdot c(2n + 1))$$

wherein c(i) represents one bit sequence, wherein i=1,2,..., $r(n)$ represents the first feature sequence, wherein $n$=1,2,....

As one embodiment, the first feature sequence is composed of complex number values of one bit sequence subjected to operation by the following formula:

$$r(n) = \frac{1}{\sqrt{2}}(1 - 2 \cdot c(n)) + j\frac{1}{\sqrt{2}}(1 - 2 \cdot c(n))$$

wherein c(i) represents one bit sequence, wherein i=1,2,..., $r$(n) represents the first feature sequence, wherein $n$=1,2,....

As one embodiment, any one sequentially indexed numerical value comprised in the first feature sequence is an element constituting the first feature sequence.

As one embodiment, any one sequentially indexed numerical value comprised in the first feature sequence is a value of bits.

As one embodiment, any one sequentially indexed numerical value comprised in the first feature sequence is equal to "0" or "1".

As one embodiment, any one sequentially indexed numerical value comprised in the first feature sequence is a value of a complex number.

As one embodiment, any one sequentially indexed numerical value comprised in the first feature sequence is a value of a complex number with a constant modulus.

As one embodiment, any one sequentially indexed numerical value comprised in the first feature sequence is a value of a complex number corresponding to a modulation symbol.

As one embodiment, the first symbol sequence comprises a plurality of symbols.

As one embodiment, the first symbol sequence comprises a plurality of sequentially indexed symbols.

As one embodiment, the first symbol sequence comprises a plurality of sequentially indexed complex-valued symbols.

As one embodiment, the first symbol sequence comprises a plurality of sequentially indexed modulation symbols.

As one embodiment, the first symbol sequence comprises values of a plurality of sequentially indexed complex numbers.

As one embodiment, the first symbol sequence comprises a plurality of sequentially indexed symbols represented by complex number values.

As one embodiment, any one symbol comprised in the first symbol sequence is a complex-valued symbol mapped to one RE (resource element).

As one embodiment, any one symbol comprised in the first symbol sequence is a value of one complex number.

As one embodiment, any one symbol comprised in the first symbol sequence is equal to 0 or one numerical value in the first feature sequence.

As one embodiment, any one symbol comprised in the first symbol sequence is a complex-valued symbol mapped to one RE (resource element).

As one embodiment, any one symbol comprised in the first symbol sequence is a complex number value mapped to a physical resource.

As one embodiment, any one symbol comprised in the first symbol sequence is a complex number value subjected to precoding.

As one embodiment, any one symbol comprised in the first symbol sequence is a complex number value subjected to layer mapping.

As one embodiment, any one symbol comprised in the first symbol sequence is a complex number value subjected to modulation.

As one embodiment, any one symbol comprised in the first symbol sequence is input to a complex number value of a transform precoder.

As one embodiment, the length of the first symbol sequence is equal to the length of the first bit sequence.

As one embodiment, the length of the first symbol sequence is equal to the length of the first feature sequence.

As one embodiment, the length of the first symbol sequence is not greater than the length of the first bit sequence.

As one embodiment, bits in the first bit sequence and numerical values in the first feature sequence are in one-to-one correspondence.

As one embodiment, bits in the first bit sequence with a bit value equal to "1" and numerical values in the first feature sequence are in one-to-one correspondence.

As one embodiment, bits in the first bit sequence with a bit value equal to "0" and numerical values in the first feature sequence are in one-to-one correspondence.

As one embodiment, any one bit with a bit value equal to "1" comprised in the first bit sequence and at least one numerical value in the first feature sequence are in correspondence.

As one embodiment, any one bit with a bit value equal to "0" comprised in the first bit sequence and at least one numerical value in the first feature sequence are in correspondence.

As one embodiment, any one bit comprised in the first bit sequence and at least one numerical value in the first feature sequence are in correspondence.

As one embodiment, any one bit comprised in the first bit sequence and a numerical value with an equal index value in the first feature sequence are in correspondence.

As one embodiment, a relationship that bits comprised in the first bit sequence and numerical values in the first feature sequence are in correspondence is predefined or configured.

As one embodiment, the multiple bits comprised in the first bit sequence are sequentially indexed according to 0, 1, 2..., and numerical values comprised in the first feature sequence are sequentially indexed according to 0, 1, 2..., and bits in the first bit sequence and numerical values in the first feature sequence with equal index values correspond to each other.

As one embodiment, the number of bits comprised in the first bit sequence is not less than the number of numerical values comprised in the first feature sequence.

As one embodiment, the length of the first bit sequence is not less than the length of the first feature sequence.

As one embodiment, the number of bits comprised in the first bit sequence is equal to the number of numerical values comprised in the first feature sequence.

As one embodiment, the length of the first bit sequence is equal to the length of the first feature sequence.

As one embodiment, the number of bits comprised in the first bit sequence is equal to twice the number of numerical values comprised in the first feature sequence.

As one embodiment, the length of the first bit sequence is equal to twice the length of the first feature sequence.

As one embodiment, the technical feature of "products of multiple bits comprised in the first bit sequence and corresponding numerical values in the first feature sequence are used for generating a first symbol sequence" comprises the following meaning: the products of the multiple bits comprised in the first bit sequence and the corresponding numerical values in the first feature sequence are used by the second node device in the present application for generating the first symbol sequence.

As one embodiment, the technical feature of "products of multiple bits comprised in the first bit sequence and corresponding numerical values in the first feature sequence are used for generating a first symbol sequence" comprises the following meaning: the first bit sequence and the first feature sequence are used for generating the first symbol sequence through OOK modulation.

As one embodiment, the technical feature of "products of multiple bits comprised in the first bit sequence and corresponding numerical values in the first feature sequence are used for generating a first symbol sequence" comprises the following meaning: the first bit sequence and the first feature sequence are used for generating the first symbol sequence through FSK modulation.

As one embodiment, the technical feature of "products of multiple bits comprised in the first bit sequence and corresponding numerical values in the first feature sequence are used for generating a first symbol sequence" comprises the following meaning: a value of any one symbol in the first symbol sequence is equal to a product between a value of one bit in the first bit sequence and one numerical value in the first feature sequence.

As one embodiment, the technical feature of "products of multiple bits comprised in the first bit sequence and corresponding numerical values in the first feature sequence are used for generating a first symbol sequence" comprises the following meaning: the corresponding products of the multiple bits comprised in the first bit sequence and the corresponding numerical values in the first feature sequence respectively constitute the first symbol sequence in sequence.

As one embodiment, the technical feature of "products of multiple bits comprised in the first bit sequence and corresponding numerical values in the first feature sequence are used for generating a first symbol sequence" comprises the following meaning: the products of the multiple bits comprised in the first bit sequence and the corresponding values in the first feature sequence respectively are used for generating all or part of symbols comprised in the first symbol sequence.

As one embodiment, the technical feature of "products of multiple bits comprised in the first bit sequence and corresponding numerical values in the first feature sequence respectively are used for generating a first symbol sequence" comprises the following meaning: the products of the multiple bits comprised in the first bit sequence and the corresponding numerical values in the first feature sequence respectively are subjected to operation (or transformation) and then sequentially generate all or part of symbols comprised in the first symbol sequence.

As one embodiment, the technical feature of "products of multiple bits comprised in the first bit sequence and corresponding numerical values in the first feature sequence are used for generating a first symbol sequence" comprises the following meanings: all bits comprised in the first bit sequence are sequentially indexed according to 0, 1, 2..., all numerical values comprised in the first feature sequence are sequentially indexed according to 0, 1, 2..., and the products of the bit values in the first bit sequence with equal indexes and the numerical values in the first feature sequence are symbols with the same index value in the first symbol sequence.

As one embodiment, the technical feature of "products of multiple bits comprised in the first bit sequence and corresponding numerical values in the first feature sequence are used for generating a first symbol sequence" comprises the following meanings: a target index value is equal to an index value of one bit in the first bit sequence; and a symbol with an index value equal to the target index value in the first symbol sequence is equal to a product between a value of a bit with an index value equal to the target index value in the first bit sequence and a numerical value with an index value equal to the target index value in the first feature sequence.

As one embodiment, the technical feature of "products of multiple bits comprised in the first bit sequence and corresponding numerical values in the first feature sequence are used for generating a first symbol sequence" comprises the following meanings: a target index value is equal to an index value of one bit in the first bit sequence; when a bit value of a bit indexed by the target index value is equal to "1", a symbol with an index value equal to the target index value in the first symbol sequence is equal to one numerical value in the first feature sequence; and when a bit value of a bit indexed by the target index value is equal to "0", a symbol with an index value equal to the target index value in the first symbol sequence is equal to 0.

As one embodiment, the technical feature of "products of multiple bits comprised in the first bit sequence and corresponding numerical values in the first feature sequence are used for generating a first symbol sequence" comprises the following meanings: a first index value is equal to an index value of one bit in the first bit sequence, and a second index value is equal to an index value of one numerical value in the first feature sequence; when a bit value of a bit indexed by the first index value is equal to "1", a symbol with an index value equal to the first index value in the first symbol sequence is equal to a numerical value with an index value equal to the second index value in the first feature sequence; and when a bit value of a bit indexed by the first index value is equal to "0", a symbol with an index value equal to the first index value in the first symbol sequence is equal to 0.

As one embodiment, the technical feature of "products of multiple bits comprised in the first bit sequence and corresponding numerical values in the first feature sequence are used for generating a first symbol sequence" comprises the following meanings: a first index value is equal to an index value of one bit in the first bit sequence, and a second index value is equal to an index value of one bit with a bit value equal to "1" in the first bit sequence among all bits with a bit value equal to "1"; when a bit value of a bit indexed by the first index value is equal to "1", a symbol with an index value equal to the first index value in the first symbol sequence is equal to a numerical value with an index value equal to the second index value in the first feature sequence; and when a bit value of a bit indexed by the first index value is equal to "0", a symbol with an index value equal to the first index value in the first symbol sequence is equal to 0.

As one embodiment, the technical feature of "products of multiple bits comprised in the first bit sequence and corresponding numerical values in the first feature sequence are used for generating a first symbol sequence" comprises the following meanings: the products of the multiple bits comprised in the first bit sequence and the corresponding numerical values in the first feature sequence are subjected to at least modulation so as to be used for generating the first symbol sequence.

As one embodiment, the technical feature of "products of multiple bits comprised in the first bit sequence and corresponding numerical values in the first feature sequence are used for generating a first symbol sequence" comprises the following meanings: the products of the multiple bits comprised in the first bit sequence and the corresponding numerical values in the first feature sequence are subjected to at least layer mapping so as to be used for generating the first symbol sequence.

As one embodiment, the technical feature of "products of multiple bits comprised in the first bit sequence and the corresponding numerical values in the first feature sequence are used for generating a first symbol sequence" comprises the following meaning: the products of the multiple bits comprised in the first bit sequence and the corresponding numerical values in the first feature sequence are subjected to at least precoding so as to be used for generating the first symbol sequence.

As one embodiment, the technical feature of "products of multiple bits comprised in the first bit sequence and corresponding numerical values in the first feature sequence are used for generating a first symbol sequence" comprises the following meaning: the products of the multiple bits comprised in the first bit sequence and the corresponding numerical values in the first feature sequence are subjected to at least interleaving so as to be used for generating the first symbol sequence.

As one embodiment, the technical feature of "products of multiple bits comprised in the first bit sequence and corresponding numerical values in the first feature sequence are used for generating a first symbol sequence" comprises the following meaning: the products of the multiple bits comprised in the first bit sequence and the corresponding numerical values in the first feature sequence are subjected to at least grouping so as to be used for generating the first symbol sequence.

As one embodiment, the technical feature of "products of multiple bits comprised in the first bit sequence and corresponding numerical values in the first feature sequence are used for generating a first symbol sequence" comprises the following meaning: the products of the multiple bits comprised in the first bit sequence and the corresponding numerical values in the first feature sequence are subjected to at least Fourier transform so as to be used for generating the first symbol sequence.

As one embodiment, the technical feature of "products of multiple bits comprised in the first bit sequence and corresponding numerical values in the first feature sequence are used for generating a first symbol sequence" comprises the following meaning: the products of the multiple bits comprised in the first bit sequence and the corresponding numerical values in the first feature sequence are subjected to at least extension/spreading so as to be used for generating the first symbol sequence.

As one embodiment, the number of symbols comprised in the first symbol sequence is the length of the first symbol sequence.

As one embodiment, the number of symbols comprised in the first symbol sequence is the total number of all non-0 symbols comprised in the first symbol sequence.

As one embodiment, the number of symbols comprised in the first symbol sequence is the total number of all symbols comprised in the first symbol sequence.

As one embodiment, the number of time-frequency resources occupied by the target wake-up signal is the total number of all REs (resource elements) occupied by the target wake-up signal in a time-frequency domain.

As one embodiment, the number of time-frequency resources occupied by the target wake-up signal comprises the total number of all time domain symbols occupied by the target wake-up signal in a time domain.

As one embodiment, the number of time-frequency resources occupied by the target wake-up signal comprises the total number of all slots occupied by the target wake-up signal in a time domain.

As one embodiment, the number of time-frequency resources occupied by the target wake-up signal comprises the total number of all subframes occupied by the target wake-up signal in a time domain.

As one embodiment, the number of time-frequency resources occupied by the target wake-up signal comprises the total number of all subcarriers occupied by the target wake-up signal in a frequency domain.

As one embodiment, the number of time-frequency resources occupied by the target wake-up signal is equal to a product between the total number of all time domain symbols occupied by the target wake-up signal in a time domain and the total number of all subcarriers occupied by the target wake-up signal in a frequency domain.

As one embodiment, the number of time-frequency resources occupied by the target wake-up signal comprises the total number of all resource blocks (RBs) occupied by the target wake-up signal in a frequency domain.

As one embodiment, the number of time-frequency resources occupied by the target wake-up signal is equal to a product between the total number of all slots occupied by the target wake-up signal in a time domain and the total number of all resource blocks (RBs) occupied by the target wake-up signal in a frequency domain.

As one embodiment, the technical feature of "the number of symbols comprised in the first symbol sequence is related to the number of time-frequency resources occupied by the target wake-up signal" comprises the following meaning: the number of the symbols comprised in the first symbol sequence is equal to the number of the time-frequency resources occupied by the target wake-up signal.

As one embodiment, the technical feature of "the number of symbols comprised in the first symbol sequence is related to the number of time-frequency resources occupied by the target wake-up signal" comprises the following meaning: the number of the symbols comprised in the first symbol sequence is equal to half the number of the time-frequency resources occupied by the target wake-up signal.

As one embodiment, the technical feature of "the number of symbols comprised in the first symbol sequence is related to the number of time-frequency resources occupied by the target wake-up signal" comprises the following meaning: the number of the symbols comprised in the first symbol sequence is linearly related to the number of the time-frequency resources occupied by the target wake-up signal.

As one embodiment, the technical feature of "the number of symbols comprised in the first symbol sequence is related to the number of time-frequency resources occupied by the target wake-up signal" comprises the following meaning: the number of the symbols comprised in the first symbol sequence is proportionally related to the number of the time-frequency resources occupied by the target wake-up signal.

As one embodiment, the technical feature of "the number of symbols comprised in the first symbol sequence is related to the number of time-frequency resources occupied by the target wake-up signal" comprises the following meaning: there is a functional relationship between the number of the symbols comprised in the first symbol sequence and the number of the time-frequency resources occupied by the target wake-up signal.

As one embodiment, the technical feature of "the number of symbols comprised in the first symbol sequence is related to the number of time-frequency resources occupied by the target wake-up signal" comprises the following meaning: the number of the time-frequency resources occupied by the target wake-up signal is used for determining (or calculating) the number of the symbols comprised in the first symbol sequence.

As one embodiment, the number of RBs occupied by the target wake-up signal in a frequency domain is equal to $2^{\alpha_2} \cdot 2^{\alpha_3} \cdot 2^{\alpha_5}$, wherein $\alpha_2, \alpha_3, \alpha_5$ are all non-negative integers.

As one embodiment, the transform precoding comprises DFT (Discrete Fourier Transform).

As one embodiment, the transform precoding comprises FFT (Fast Fourier Transform).

As one embodiment, the transform precoding is a transform used when a waveform of DFT-s-OFDM is generated.

As one embodiment, the transform precoding is a transform that transforms a time domain digital signal into a frequency domain digital signal.

As one embodiment, the transform precoding is a transform that transforms a digital signal from a time domain to a frequency domain.

As one embodiment, the transform precoding comprises at least one of the following three: oversampling, grouping, and DFT (Discrete Fourier Transform).

As one embodiment, the technical feature of "the first symbol sequence is subjected to at least transform precoding so as to be used for generating the target wake-up signal" comprises the following meaning: the first symbol sequence is subjected to at least transform precoding to be used by the second node device in the present application for generating the target wake-up signal.

As one embodiment, the technical feature of "the first symbol sequence is subjected to at least transform precoding so as to be used for generating the target wake-up signal" comprises the following meaning: the first symbol sequence is subjected to at least transform precoding so as to be used for generating a baseband signal of the target wake-up signal.

As one embodiment, the technical feature of "the first symbol sequence is subjected to at least transform precoding so as to be used for generating the target wake-up signal" comprises the following meaning: the first symbol sequence is subjected to at least transform precoding so as to be used for generating a radio frequency signal of the target wake-up signal.

As one embodiment, the technical feature of "the first symbol sequence is subjected to at least transform precoding so as to be used for generating the target wake-up signal" comprises the following meaning: the first symbol sequence serves as the input of the transform precoding so as to be used for generating the target wake-up signal.

As one embodiment, the technical feature of "the first symbol sequence is subjected to at least transform precoding so as to be used for generating the target wake-up signal" comprises the following meaning: the first symbol sequence is input to a sequence output by a transform precoder so as to be used for generating the target wake-up signal.

As one embodiment, the technical feature of "the first symbol sequence is subjected to at least transform precoding so as to be used for generating the target wake-up signal" comprises the following meaning: the first symbol sequence at least uses transform precoding in a process of generating the target wake-up signal.

As one embodiment, the technical feature of "the first symbol sequence is subjected to at least transform precoding so as to be used for generating the target wake-up signal" comprises the following meaning: the first symbol sequence at least passes through a transform precoder in a process of generating the target wake-up signal.

As one embodiment, the technical feature of "the first symbol sequence is subjected to at least transform precoding so as to be used for generating the target wake-up signal" comprises the following meaning: the first symbol sequence is subjected to processing (or transform) and then is input to a sequence output by a transform precoder so as to be used for generating the target wake-up signal.

As one embodiment, the technical feature of "the first symbol sequence is subjected to at least transform precoding so as to be used for generating the target wake-up signal" comprises the following meanings: the first symbol sequence is subjected to at least transform precoding, mapping to physical resources, OFDM baseband signal generation, modulation and upconversion to generate the target wake-up signal.

As one embodiment, the technical feature of "the first symbol sequence is subjected to at least transform precoding so as to be used for generating the target wake-up signal" comprises the following meanings: the first symbol sequence is subjected to at least transform precoding, mapping to physical resources, and OFDM baseband signal generation to generate the target wake-up signal.

As one embodiment, the technical feature of "the first symbol sequence is subjected to at least transform precoding so as to be used for generating the target wake-up signal" comprises the following meaning: the first symbol sequence is subjected to at least layer mapping, transform precoding, mapping to physical resources, OFDM baseband signal generation, modulation and upconversion to generate the target wake-up signal.

As one embodiment, the technical feature of "the first symbol sequence is subjected to at least transform precoding so as to be used for generating the target wake-up signal" comprises the following meanings: the first symbol sequence is subjected to at least transform precoding, precoding, mapping to physical resources, OFDM baseband signal generation, modulation and upconversion to generate the target wake-up signal.

As one embodiment, the first feature sequence being used for generating the target wake-up signal depends on the capability of the first node device.

## Embodiment 2

Embodiment 2 illustrates a schematic diagram of one network architecture according to the present application, as shown in FIG. 2. FIG. 2 illustrates a diagram of a network architecture 200 of a 5G NR, LTE (Long-Term Evolution) and LTE-A (Long-Term Evolution Advanced) system. The 5G NR or LTE network architecture 200 may be referred to as 5GS (5G System)/EPS (Evolved Packet System) 200 or some other suitable terms. The 5GS/EPS 200 may comprise one or more pieces of UE (User Equipment) 201, NG-RAN (Next Generation Radio Access Network) 202, 5GC (5G Core Network)/EPC (Evolved Packet Core) 210, an HSS (Home Subscriber Server)/UDM (Unified Data Management) 220 and an Internet service 230. The 5GS/EPS may be interconnected with other access networks, but these entities/interfaces are not shown for simplicity. As shown in the figure, the 5GS/EPS provides packet switching services, but those skilled in the art will readily understand that various concepts presented throughout the present application can be extended to networks that provide circuit switching services or other cellular networks. The NG-RAN comprises an NR/Evolved Node B (gNB/eNB) 203 and other gNB (eNB) 204. The gNB (eNB) 203 provides user and control plane protocol termination towards the UE201. The gNB (eNB) 203 may be connected to the other gNB (eNB) 204 via an Xn/X2 interface (e.g., backhaul). The gNB (eNB) 203 may also be referred to as a base station, a base transceiver station, a radio base station, a radio transceiver, a transceiver function, a basic service set (BSS), an extended service set (ESS), a TRP (transmitter receiver point), or some other suitable terms. The gNB (eNB) 203 provides an access point to the 5GC/EPC210 for the UE201. Examples of the UE201 comprise a cellular phone, a smart phone, a session initiation protocol (SIP) phone, a laptop computer, a personal digital assistant (PDA), a satellite radio, a non-terrestrial base station communication, a satellite mobile communication, a global positioning system, a multimedia apparatus, a video apparatus, a digital audio player (e.g., an MP3 player), a camera, a game console, a drone, an aircraft, a narrowband Internet of Things device, a machine type communication device, a land vehicle, an automobile, a wearable device, or any other similarly functional apparatuses. Those skilled in the art may also refer to the UE201 as a mobile station, a subscriber station, a mobile unit, a subscriber unit, a wireless unit, a remote unit, a mobile apparatus, a wireless apparatus, a wireless communication apparatus, a remote apparatus, a mobile subscriber station, an access terminal, a mobile terminal, a wireless terminal, a remote terminal, a handset, a user agent, a mobile client, a client, or some other suitable terms. The gNB (eNB) 203 is connected to the 5GC/EPC210 via an S1/NG interface. The 5GC/EPC210 comprises an MME (Mobility Management Entity)/AMF (Authentication Management Field)/SMF (Session Management Function) 211, other MME/AMF/SMF214, an S-GW (Service Gateway)/UPF (User Plane Function) 212 and a P-GW (Packet Data Network Gateway)/UPF213. The MME/AMF/SMF211 is a control node that handles signaling between the UE201 and the 5GC/EPC210. Generally, the MME/AMF/SMF211 provides bearer and connection management. All user IP (Internet Protocol) packets are transmitted through the S-GW/UPF212, and the S-GW/UPF212 itself is connected to the P-GW/UPF213. The P-GW provides UE IP address allocation and other functions. The P-GW/UPF213 is connected to the Internet service 230. The Internet service 230 comprises operator-corresponding Internet protocol services, which may specifically comprise Internet, intranet, IMS (IP Multimedia Subsystem) and packet switching streaming services.

As one embodiment, the UE201 corresponds to the first node device in the present application.

As one embodiment, the gNB (eNB) 201 corresponds to the second node device in the present application.

## Embodiment 3

Embodiment 3 shows a schematic diagram of an embodiment of a wireless protocol architecture of one user plane and one control plane according to the present application, as shown in FIG. 3. FIG. 3 is a schematic diagram illustrating an embodiment of a radio protocol architecture for a user plane 350 and a control plane 300, and FIG. 3 shows the radio protocol architecture of the control plane 300 for a first node device (UE or gNB) and a second node device (gNB or UE) using three layers: Layer 1, Layer 2, and Layer 3. The Layer 1 (L1 layer) is the lowest layer and implements various PHY (physical layer) signal processing functions. The L1 layer will be referred to as PHY301 herein. The Layer 2 (L2 layer) 305 is above PHY301 and is responsible for a link between the first node device and the second node device through PHY301. The L2 layer 305 comprises an MAC (Medium Access Control) sublayer 302, an RLC (Radio Link Control) sublayer 303, and a PDCP (Packet Data Convergence Protocol) sublayer 304, these sublayers terminating at the second node device. The PDCP sublayer 304 provides multiplexing between different radio bearers and logical channels. The PDCP sublayer 304 also provides security by encrypting data packets, and provides cross-zone mobility support for the first node device between the second node devices. The RLC sublayer 303 provides segmentation and reassembly of upper layer data packets, retransmission of lost data packets, and reordering of data packets to compensate for out-of-order reception due to HARQ. The MAC sublayer 302 provides multiplexing between logical and transport channels. The MAC sublayer 302 is also responsible for allocating various radio resources (e.g., resource blocks) in one cell between the first node devices. The MAC sublayer 302 is also responsible for HARQ operation. The RRC (Radio Resource Control) sublayer 306 in Layer 3 (L3 layer) in the control plane 300 is responsible for acquiring radio resources (i.e., radio bearers) and configuring lower layer using RRC signaling between the second node device and the first node device. The radio protocol architecture of the user plane 350 comprises the Layer 1 (L1 layer) and the Layer 2 (L2 layer). The radio protocol architecture for the first node device and the second node device in the user plane 350 is substantially the same as corresponding layers and sublayers in the control plane 300 for the physical layer 351, the PDCP sublayer 354 in the L2 layer 355, the RLC sublayer 353 in the L2 layer 355, and the MAC sublayer 352 in the L2 layer 355, but the PDCP sublayer 354 also provides header compression for upper layer data packets to reduce radio transmission overhead. The L2 layer 355 in the user plane 350 also comprises an SDAP (Service Data Adaptation Protocol) sublayer 356, and the SDAP sublayer 356 is responsible for mapping between a QoS stream and a data radio bearer (DRB) to support the diversity of services. Although not shown in the figure, the first node device may have several upper layers above the L2 layer 355, comprising a network layer (e.g., an IP layer) terminating at a P-GW on a network side and an application layer terminating at another end of the connection (e.g., remote UE, a server, etc.).

As one embodiment, the radio protocol architecture in FIG. 3 is applicable to the first node device in the present application.

As one embodiment, the radio protocol architecture in FIG. 3 is applicable to the second node device in the present application.

**Embodiment 4**

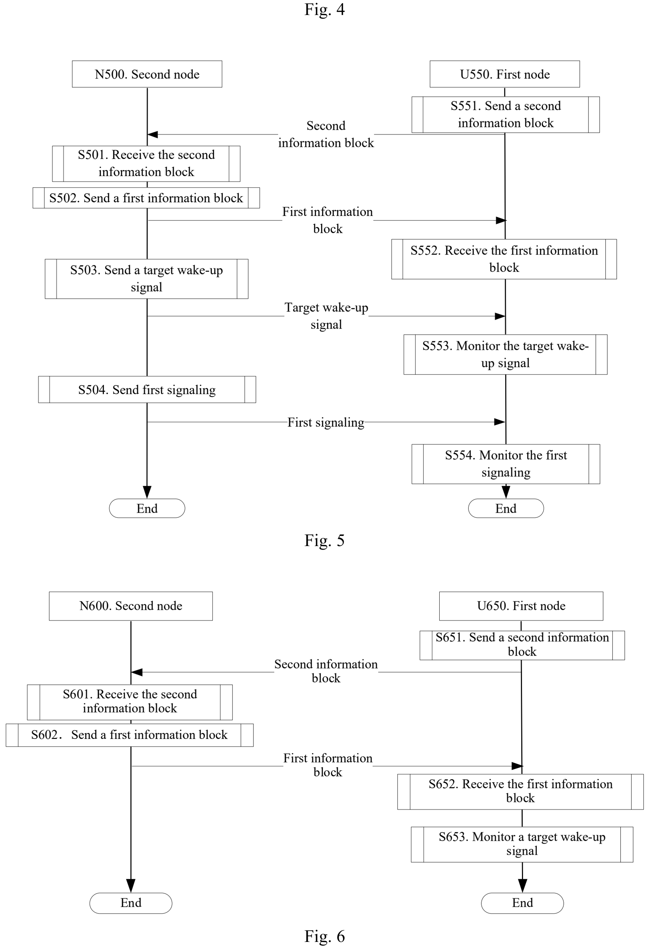

Embodiment 4 shows a schematic diagram of a first node device and a second node device according to one embodiment of the present application, as shown in FIG. 4.

The first node device (450) may comprise a controller/processor 490, a data source/buffer 480, a receiving processor 452, a transmitting device/receiving device 456, and a transmitting processor 455, and the transmitting device/receiving device 456 comprises an antenna 460.

The second node device (410) may comprise a controller/processor 440, a data source/buffer 430, a receiving processor 412, a transmitting device/receiving device 416, and a transmitting processor 415, and the transmitting device/receiving device 416 comprises an antenna 420.

In the DL (Downlink), upper layer packets, such as high-layer information comprised in a first information block, high-layer information comprised in first signaling (if the first signaling comprises the high-layer information), and high-layer information comprised in second signaling (if the second signaling comprises the high-layer information) in the present application, are provided to the controller/processor 440. The controller/processor 440 implements functions of the L2 layer and layers above it. In the DL, the controller/processor 440 provides packet header compression, encryption, packet segmentation and reordering, multiplexing between logical and transport channels, and radio resource allocation to the first node device 450 based on various priority metrics. The controller/processor 440 is also responsible for HARQ operations, retransmission of lost packets, and signaling to the first node device 450. For example, high-layer information comprised in a first information block, high-layer information comprised in first signaling (if the first signaling comprises the high-layer information), and high-layer information comprised in the second signaling (if the second signaling comprises the high-layer information) in the present application are generated at the controller/processor 440. The transmitting processor 415 implements various signal processing functions for the L1 layer (i.e., the physical layer), comprising coding, interleaving, scrambling, modulation, power control/allocation, precoding, and physical layer control signaling generation, etc. For example, generation of a physical layer signal carrying a first information block in the present application, a physical layer signal corresponding to first signaling, and a physical layer signal corresponding to second signaling is completed at the transmitting processor 415. Generated modulation symbols are divided into parallel streams, and each stream is mapped to a corresponding multi-carrier sub-carrier and/or multi-carrier symbol, which is then mapped to the antenna 420 by the transmitting processor 415 via the transmitting device 416 to be transmitted in a radio frequency signal form. At a receiving end, each receiving device 456 receives a radio frequency signal through its corresponding antenna 460, and each receiving device 456 recovers baseband information modulated onto a radio frequency carrier and provides the baseband information to the receiving processor 452. The receiving processor 452 implements various signal reception processing functions of the L1 layer. The signal reception and processing functions comprise monitoring of a physical layer signal carrying a first information block in the present application, monitoring of first signaling, monitoring of second signaling, demodulation based on various modulation schemes (for example, binary phase shift keying (BPSK), and quadrature phase shift keying (QPSK)) through multi-carrier symbols in a multi-carrier symbol stream, followed by descrambling, decoding and deinterleaving to recover data or control transmitted by the second node device 410 on a physical channel, and then providing the data and control signals to the controller/processor 490. The controller/processor 490 is responsible for the L2 layer and layers above it. The controller/processor 490 interprets high-layer information comprised in a first information block in the present application, high-layer information comprised in first signaling (if the first signaling comprises the high-layer information), and high-layer information comprised in second signaling (if the second signaling comprises the high-layer information). The controller/processor may be associated with a memory 480 storing a program code and data. The memory 480 may be referred to as computer-readable media.

In the uplink (UL) transmission, similar to downlink transmission, high-layer information comprising high-layer information comprised in a second information block in the present application is generated at the controller/processor 490 and then is implemented by the transmitting processor 455 for various signal transmission processing functions for the L1 layer (i.e., the physical layer), comprising generation of a physical layer signal carrying a second information block is completed at the transmitting processor 455, and then the physical layer signal is mapped to the antenna 460 by the transmitting processor 455 via the transmitting device 456 and is transmitted in a radio frequency signal form. The receiving device 416 receives a radio frequency signal through its corresponding antenna 420, and each receiving device 416 recovers baseband information modulated on a radio frequency carrier and provides the baseband information to the receiving processor 412. The receiving processor 412 implements various signal receiving processing functions for the L1 layer (i.e., the physical layer), comprising receiving and processing a physical layer signal carrying a second information block, and then providing data and/or control signals to the controller/processor 440. The functions of the L2 layer implemented at the controller/processor 440 comprise interpreting high-layer information, comprising the interpretation of high-layer information carried by a second information block. The controller/processor may be associated with a buffer 430 storing a program code and data. The buffer 430 may be a computer-readable medium.

As one embodiment, the first node device 450 apparatus comprises: at least one processor and at least one memory, the at least one memory comprising a computer program code; the at least one memory and the computer program code are configured to be used together with the at least one processor, and the first node device 450 apparatus at least: receives a first information block; and monitors a target wake-up signal, the target wake-up signal being used for determining whether to monitor first signaling, the first information block being used for determining a time-frequency resource occupied by the target wake-up signal, and the first signaling carrying control information, wherein the target wake-up signal carries a first bit block, and the first bit block comprises at least one bit; the first bit block is used for generating a first bit sequence, and the first bit sequence comprises a plurality of sequentially indexed bits; a first feature sequence is a sequence comprising a plurality of sequentially indexed numerical values, and products of the plurality of bits comprised in the first bit sequence and corresponding numerical values in the first feature sequence are used for generating a first symbol sequence; and the number of symbols comprised in the first symbol sequence is related to the number of time-frequency resources occupied by the target wake-up signal, and the first symbol sequence is subjected to at least transform precoding so as to be used for generating the target wake-up signal.

As one embodiment, the first node device 450 apparatus comprises: a memory storing a computer-readable instruction program, the computer-readable instruction program generates an action when executed by at least one processor, and the action comprises: receiving a first information block; monitoring a target wake-up signal, the target wake-up signal being used for determining whether to monitor first signaling, the first information block being used for determining a time-frequency resource occupied by the target wake-up signal, and the first signaling carrying control information, wherein the target wake-up signal carries a first bit block, and the first bit block comprises at least one bit; the first bit block is used for generating a first bit sequence, and the first bit sequence comprises a plurality of sequentially indexed bits; a first feature sequence is a sequence comprising a plurality of sequentially indexed numerical values, and products of the plurality of bits comprised in the first bit sequence and corresponding numerical values in the first feature sequence are used for generating a first symbol sequence; and the number of symbols comprised in the first symbol sequence is related to the number of time-frequency resources occupied by the target wake-up signal, and the first symbol sequence is subjected to at least transform precoding so as to be used for generating the target wake-up signal.

As one embodiment, the second node device 410 apparatus comprises: at least one processor and at least one memory, the at least one memory comprising a computer program code; and the at least one memory and the computer program code are configured to be used together with the at least one processor. The second node device 410 apparatus at least: sends a first information block; and sends a target wake-up signal, the target wake-up signal being used for determining whether to monitor first signaling, the first information block being used for determining a time-frequency resource occupied by the target wake-up signal, and the first signaling carrying control information, wherein the target wake-up signal carries a first bit block, and the first bit block comprises at least one bit; the first bit block is used for generating a first bit sequence, and the first bit sequence comprises a plurality of sequentially indexed bits; a first feature sequence is a sequence comprising a plurality of sequentially indexed numerical values, and products of the plurality of bits comprised in the first bit sequence and corresponding numerical values in the first feature sequence are used for generating a first symbol sequence; and the number of symbols comprised in the first symbol sequence is related to the number of time-frequency resources occupied by the target wake-up signal, and the first symbol sequence is subjected to at least transform precoding so as to be used for generating the target wake-up signal.

As one embodiment, the second node device 410 comprises: a memory storing a computer-readable instruction program, the computer-readable instruction program generates an action when executed by at least one processor, and the action comprises: sending a first information block; and sending a target wake-up signal, the target wake-up signal being used for determining whether to monitor first signaling, the first information block being used for determining a time-frequency resource occupied by the target wake-up signal, and the first signaling carrying control information, wherein the target wake-up signal carries a first bit block, and the first bit block comprises at least one bit; the first bit block is used for generating a first bit sequence, and the first bit sequence comprises a plurality of sequentially indexed bits; a first feature sequence is a sequence comprising a plurality of sequentially indexed numerical values, and products of the plurality of bits comprised in the first bit sequence and corresponding numerical values in the first feature sequence are used for generating a first symbol sequence; and the number of symbols comprised in the first symbol sequence is related to the number of time-frequency resources occupied by the target wake-up signal, and the first symbol sequence is subjected to at least transform precoding so as to be used for generating the target wake-up signal.

As one embodiment, the first node device 450 is one piece of user equipment (UE).

As one embodiment, the second node device 410 is one base station device (gNB/eNB).

As one embodiment, the receiving device 456 (comprising the antenna 460), the receiving processor 452 and the controller/processor 490 are used for receiving the first information block in the present application.

As one embodiment, the receiving device 456 (comprising the antenna 460) is used for monitoring a target wake-up signal in the present application.

As one embodiment, the receiving device 456 (comprising the antenna 460), the receiving processor 452 and the controller/processor 490 are used for monitoring first signaling in the present application.

As one embodiment, the transmitting device 456 (comprising the antenna 460), the transmitting processor 455 and the controller/processor 490 are used for sending the second information block in the present application.

As one embodiment, the receiving device 456 (comprising the antenna 460), the receiving processor 452 and the controller/processor 490 are used for monitoring second signaling in the present application.

As one embodiment, the transmitting device 416 (comprising the antenna 420), the transmitting processor 415 and the controller/processor 440 are used for sending the first information block in the present application.

As one embodiment, the transmitting device 416 (comprising the antenna 420) is used for sending a target wake-up signal.

As one embodiment, the transmitting device 416 (comprising the antenna 420), the transmitting processor 415 and the controller/processor 440 are used for sending first signaling in the present application.

As one embodiment, the receiving device 416 (comprising the antenna 420), the receiving processor 412 and the controller/processor 440 are used for receiving the second information block in the present application.

As one embodiment, the transmitting device 416 (comprising the antenna 420), the transmitting processor 415 and the controller/processor 440 are used for sending second signaling in the present application.

## Embodiment 5

Embodiment 5 illustrates a flow chart of wireless signal transmission according to one embodiment of the present application, as shown in FIG. 5. In FIG. 5, a second node device N500 is a maintenance base station of a serving cell of a first node device U550. It is particularly noted that the order in this example does not limit the signal transmission order and implementation order in the present application.

For **the second node device N500,** a second information block is received in step S501, a first information block is sent in step S502, a target wake-up signal is sent in step S503, and first signaling is sent in step S504.

For **the first node device U550,** a second information block is sent in step S551, a first information block is received in step S552, a target wake-up signal is monitored in step S553, and first signaling is monitored in step S554.

In Embodiment 5, the target wake-up signal is used for determining whether to monitor first signaling, the first information block is used for determining a time-frequency resource occupied by the target wake-up signal, and the first signaling carries control information; the target wake-up signal carries a first bit block, and the first bit block comprises at least one bit; the first bit block is used for generating a first bit sequence, and the first bit sequence comprises a plurality of sequentially indexed bits; a first feature sequence is a sequence comprising a plurality of sequentially indexed numerical values, and products of the plurality of bits comprised in the first bit sequence and corresponding numerical values in the first feature sequence are used for generating a first symbol sequence; the number of symbols comprised in the first symbol sequence is related to the number of time-frequency resources occupied by the target wake-up signal, and the first symbol sequence is subjected to at least transform precoding so as to be used for generating the target wake-up signal; and the second information block is used for indicating at least one band, and the first node device supports reception of a wake-up signal on each band indicated by the second information block.

As one embodiment, the second information block is used for indicating the capability of the first node device.

As one embodiment, the second information block is transmitted through an air interface or a wireless interface.

As one embodiment, the second information block is also transmitted through an X2 interface, an Xn interface, or an NG interface.

As one embodiment, the second information block is also transmitted between network nodes.

As one embodiment, the second information block is received by a network node through an RAN interface and then is transmitted to another network node or to a core network.

As one embodiment, the second information block is received by a network node through a Uu interface and then is transmitted to another network node or to a core network.

As one embodiment, the second information block comprises all or part of high-layer signaling or physical layer signaling.

As one embodiment, the second information block is earlier than the first information block.

As one embodiment, the second information block is later than the first information block.

As one embodiment, the second information block comprises all or part of RRC signaling, or the second information block comprises all or part of MAC layer signaling.

As one embodiment, the second information block is transmitted through a PUSCH or PUCCH (Physical Uplink Control Channel).

As one embodiment, the second information block is per UE, or the second information block is per feature set, or the second information block is per band, or the second information block is per band combination, or the second information block is per band list, or the second information block is per frequency range, or the second information block is per duplex mode.

As one embodiment, the second information block is related to a frequency range.

As one embodiment, the second information block is related to the duplex mode (TDD or FDD).

As one embodiment, the second information block comprises all or part of "UE-RadioPagingInfo".

As one embodiment, the second information block comprises all or part of "UERadioPagingInformation".

As one embodiment, the second information block comprises all or part of "UE-NR-Capability-v1900".

As one embodiment, the second information block comprises all or part of "LPWUS-Parameters-v1900".

As one embodiment, the second information block comprises all or part of "lpwus-SubgroupingSupportBandList-r19".

As one embodiment, the second information block is used for indicating UE capabilities required for paging.

As one embodiment, the technical feature of "the second information block is used for indicating at least one band" comprises the following meaning: all or part comprised in the second information block is used by the first node device in the present application for explicitly or implicitly indicating at least one band.

As one embodiment, the technical feature of "the second information block is used for indicating at least one band" comprises the following meaning: all or part comprised in the second information block is used by the second node device in the present application for explicitly or implicitly indicating at least one band.

As one embodiment, the technical feature of "the second information block is used for indicating at least one band" comprises the following meaning: all or part comprised in the second information block is used by the first node device in the present application for explicitly or implicitly indicating at least one band to the second node device in the present application.

As one embodiment, the technical feature of "the second information block is used for indicating at least one band" comprises the following meaning: all or part comprised in the second information block is used by the second node device in the present application for explicitly or implicitly indicating at least one band to another network node or a core network.

As one embodiment, the technical feature of "the second information block is used for indicating at least one band" comprises the following meaning: all or part comprised in the second information block is used by the second node device in the present application for explicitly or implicitly indicating at least one band to another network node or a core network.

As one embodiment, the technical feature of "the second information block is used for indicating at least one band" comprises the following meaning: the second information block is used for indicating one band list.

As one embodiment, the technical feature of "the second information block is used for indicating at least one band" comprises the following meaning: the second information block is used for indicating a band that supports monitoring (or receiving) a wake-up signal.

As one embodiment, the number of bands indicated by the second information block is not greater than 1024.

As one embodiment, the second information block is also used for indicating a receiver parameter value supported by the first node device.

As one embodiment, the second information block is also used for indicating a receiver type supported by the first node device.

As one embodiment, the second information block is also used for indicating a reception parameter value of a wake-up signal supported by the first node device.

As one embodiment, the second information block is also used for indicating at least one configuration parameter value of a wake-up signal supported by the first node device.

As one embodiment, the technical feature of "the first node device supports reception of a wake-up signal on each band indicated by the second information block" comprises the following meaning: the first node device has a capability to monitor (or receive) a wake-up signal on each band indicated by the second information block.

As one embodiment, the technical feature of "the first node device supports reception of a wake-up signal on each band indicated by the second information block" comprises the following meaning: the first node device supports reception of a signal or indication used for paging wake-up on each band indicated by the second information block.

As one embodiment, the technical feature of "the first node device supports reception of a wake-up signal on each band indicated by the second information block" comprises the following meaning: the first node device supports reception of a signal or indication used for DRX wake-up on each band indicated by the second information block.

As one embodiment, the technical feature of "the first node device supports reception of a wake-up signal on each band indicated by the second information block" comprises the following meaning: the first node device supports wake-up for paging on each band indicated by the second information block.

As one embodiment, the technical feature of "the first node device supports reception of a wake-up signal on each band indicated by the second information block" comprises the following meaning: the first node device supports advanced indication for paging on each band indicated by the second information block.

As one embodiment, the first node device supports reception of a wake-up signal having one or more given configuration parameter values on each band indicated by the second information block.

As one embodiment, the first node device supports reception of a wake-up signal on each band indicated by the second information block and supports a given wake-up signal receiver type.

As one embodiment, the first node device supports reception of a wake-up signal on each band indicated by the second information block and supports a given wake-up signal receiver capability.

As one embodiment, the first node device supports reception of a wake-up signal on each band indicated by the second information block and supports a given wake-up signal receiver parameter value.

As one embodiment, the second information block is also used for indicating that the first node device supports multiple configuration sets for the wake-up signal.

As one embodiment, the second information block is also used for indicating that the first node device supports grouping (or sub-grouping) user equipment.

As one embodiment, the first node device supports one or a combination of any more of {receiving (or monitoring) a wake-up signal, receiving (or monitoring) a wake-up signal with one or more given configuration parameter values, grouping (or sub-grouping) user equipment, and supporting multiple configuration sets for a wake-up signal} on each band indicated by the second information block.

**Embodiment 6**

Embodiment 6 illustrates another flow chart of wireless signal transmission according to one embodiment of the present application, as shown in FIG. 6. In FIG. 6, a second node device N600 is a maintenance base station of a serving cell of a first node device U650. It is particularly noted that the order in this example does not limit the signal transmission order and implementation order in the present application.

For **the second node device N600,** a second information block is received in step S601, and a first information block is sent in step S602.

For a **first node device U650,** the second information block is sent in step S651, the first information block is received in step S652, and a target wake-up signal is monitored in step S653.

In Embodiment 6, the target wake-up signal is used for determining whether to monitor first signaling, the first information block is used for determining a time-frequency resource occupied by the target wake-up signal, and the first signaling carries control information; the target wake-up signal carries a first bit block, and the first bit block comprises at least one bit; the first bit block is used for generating a first bit sequence, and the first bit sequence comprises a plurality of sequentially indexed bits; a first feature sequence is a sequence comprising a plurality of sequentially indexed numerical values, and products of the plurality of bits comprised in the first bit sequence and corresponding numerical values in the first feature sequence are used for generating a first symbol sequence; the number of symbols comprised in the first symbol sequence is related to the number of time-frequency resources occupied by the target wake-up signal, and the first symbol sequence is subjected to at least transform precoding so as to be used for generating the target wake-up signal;

and the second information block is used for indicating at least one band, and the first node device supports reception of a wake-up signal on each band indicated by the second information block.

## Embodiment 7

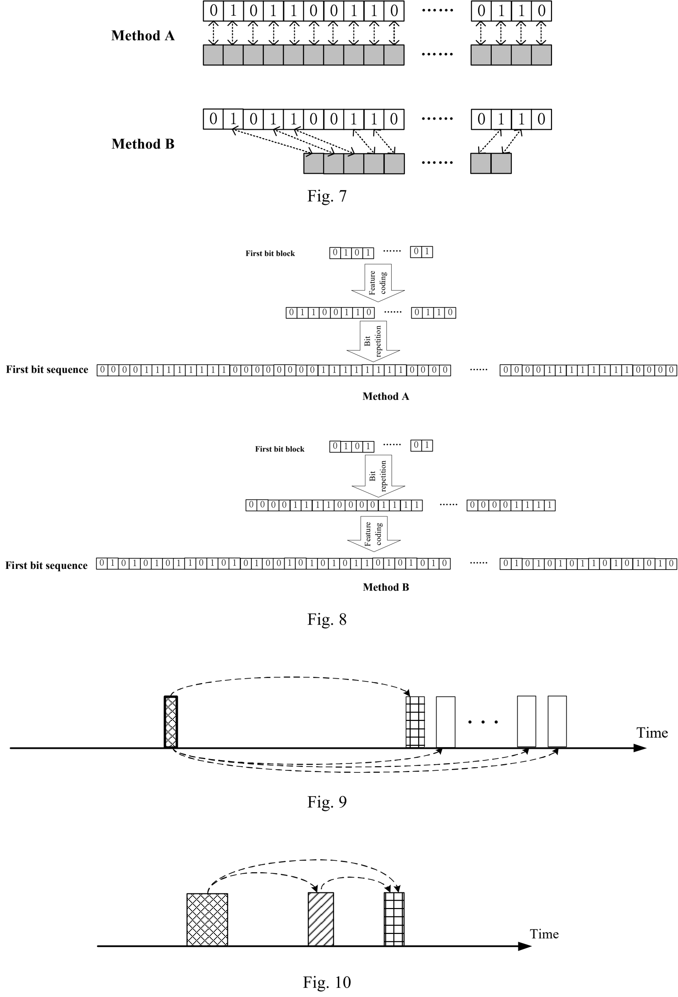

Embodiment 7 illustrates a schematic diagram of a relationship between a first bit sequence and a first feature sequence according to one embodiment of the present application, as shown in FIG. 7. In FIG. 7, for a method A and a method B, each unfilled small block represents one bit in the first bit sequence, a digit in the small block represents a bit value, and each gray-filled small block represents one numerical value in the first feature sequence.

In Embodiment 7, bits in the first bit sequence in the present application and numerical values in the first feature sequence in the present application are in one-to-one correspondence, or bits in the first bit sequence with a bit value equal to "1" and numerical values in the first feature sequence are in one-to-one correspondence.

As one embodiment, numerical values in a first feature sequence correspond to bits in a first bit sequence or bits with a bit value equal to "1", thereby being able to support long sequences as feature sequences and improving the performance of sequence monitoring.

As one embodiment, numerical values in a first feature sequence correspond to bits in a first bit sequence with a bit value equal to "1", thereby supporting sequence mapping in a puncturing manner, and further improving the sequence detection performance while simplifying the implementation.

As one embodiment, the technical features of "bits in the first bit sequence and numerical values in the first feature sequence are in one-to-one correspondence" and "numerical values in the first feature sequence and bits in the first bit sequence are in one-to-one correspondence" are equivalent or can be used interchangeably.

As one embodiment, the technical feature of "bits in the first bit sequence and numerical values in the first feature sequence are in one-to-one correspondence" comprises the following meanings: the length of the first bit sequence is equal to the length of the first feature sequence, and there are bits and numerical values with equal index values in the first bit sequence and the first feature sequence, respectively.

As one embodiment, the technical feature of "bits in the first bit sequence and numerical values in the first feature sequence are in one-to-one correspondence" comprises the following meaning: there is always a numerical value in the first feature sequence that is used for generating at least one symbol in the first symbol sequence by multiplying a bit value of one bit in the first bit sequence.

As one embodiment, the technical feature of "bits in the first bit sequence and numerical values in the first feature sequence are in one-to-one correspondence" comprises the following meaning: there is always a numerical value in the first feature sequence that is used for generating at least one symbol in the first symbol sequence by multiplying a bit value of one bit in the first bit sequence; and there is always one bit in the first bit sequence, a bit value of which is used for generating at least one symbol in the first symbol sequence by multiplying a bit value of one bit in the first feature sequence.

As one embodiment, the technical feature of "bits in the first bit sequence and numerical values in the first feature sequence are in one-to-one correspondence" comprises the following meanings: the length of the first bit sequence is equal to the length of the first feature sequence, and index values of the bits in the first bit sequence and index values of the numerical values in the first feature sequence are equal in one-to-one correspondence.

As one embodiment, the technical feature of "bits in the first bit sequence and numerical values in the first feature sequence are in one-to-one correspondence" comprises the following meanings: all bits comprised in the first bit sequence are sequentially indexed according to 0, 1, 2..., the numerical values comprised in the first feature sequence are sequentially indexed according to 0, 1, 2..., and products of bit values of bits with equal index values in the first bit sequence and the numerical values in the first feature sequence are used for generating at least one symbol in the first symbol sequence.

As one embodiment, the technical feature of "bits in the first bit sequence and numerical values in the first feature sequence are in one-to-one correspondence" comprises the following meanings: all bits comprised in the first bit sequence are sequentially indexed according to 0, 1, 2..., the numerical values comprised in the first feature sequence are sequentially indexed according to 0, 1, 2..., and a multiplication operation is performed between bit values of bits with equal index values in the first bit sequence and the numerical values in the first feature sequence.

As one embodiment, the correspondence refers to being factors of each other in a multiplication operation.

As one embodiment, the correspondence refers to being respectively used as a multiplier and a multiplicand, or respectively as a multiplicand and a multiplier in a multiplication operation.

As one embodiment, the technical feature of "bits with a bit value equal to "1" in the first bit sequence and numerical values in the first feature sequence are in one-to-one correspondence" and "numerical values in the first feature sequence and bits with a bit value equal to "1" in the first bit sequence are in one-to-one correspondence" are equivalent or can be used interchangeably.

As one embodiment, the technical feature of "bits with a bit value equal to "1" in the first bit sequence and numerical values in the first feature sequence are in one-to-one correspondence" comprises the following feature: the numerical values in the first feature sequence are only in one-to-one correspondence to bits with a bit value equal to "1" in the first bit sequence.

As one embodiment, the technical feature of "bits with a bit value equal to "1" in the first bit sequence and numerical values in the first feature sequence are in one-to-one correspondence" comprises the following features: the length of the first feature sequence is equal to the number of bits with a bit value equal to "1" in the first bit sequence, and the bits with the bit value equal to "1" in the first bit sequence and the numerical values in the first feature sequence are in one-to-one correspondence in an order of index size.

As one embodiment, the technical feature of "bits with a bit value equal to "1" in the first bit sequence and numerical values in the first feature sequence are in one-to-one correspondence" comprises the following features: there is always a numerical value in the first feature sequence that is used together with a bit with a bit value equal to 1 in the first bit sequence so as to be used for generating at least one symbol in the first symbol sequence.

As one embodiment, the technical feature of "bits with a bit value equal to "1" in the first bit sequence and numerical values in the first feature sequence are in one-to-one correspondence" comprises the following features: one bit with a bit value equal to 1 in the first bit sequence is used for determining that one numerical value in the first feature sequence is used for generating at least one symbol in the first symbol sequence.

As one embodiment, the technical feature of "bits with a bit value equal to "1" in the first bit sequence and numerical values in the first feature sequence are in one-to-one correspondence" comprises the following features: there is always one numerical value in the first feature sequence that is used for generating at least one symbol in the first symbol sequence by multiplying one bit with a bit value equal to "1" in the first bit sequence; and there is always one bit with a bit value equal to "1" in the first bit sequence, that is used for generating at least one symbol in the first symbol sequence by multiplying one numerical value in the first feature sequence.

As one embodiment, the technical feature of "bits with a bit value equal to "1" in the first bit sequence and numerical values in the first feature sequence are in one-to-one correspondence" comprises the following feature: index values of bits with a bit value equal to "1" in all bit values with a bit value equal to "1" in the first bit sequence and index values of the numerical values in the first feature sequence are equal in one-to-one correspondence.

As one embodiment, the technical feature of "bits with a bit value equal to "1" in the first bit sequence and numerical values in the first feature sequence are in one-to-one correspondence" comprises the following features: bits with a bit value equal to "1" in the first bit sequence form a second bit sequence in an order of the first bit sequence, and bits in the second bit sequence and the numerical values in the first feature sequence are in one-to-one correspondence.

As one embodiment, the technical feature of "bits with a bit value equal to "1" in the first bit sequence and numerical values in the first feature sequence are in one-to-one correspondence" comprises the following meanings: all bits with a bit value equal to "1" comprised in the first bit sequence are sequentially indexed according to 0, 1, 2..., the numerical values comprised in the first feature sequence are sequentially indexed according to 0, 1, 2..., and products of bits with a bit value equal to "1" in the first bit sequence with equal index values and the numerical values in the first feature sequence are used for generating at least one symbol in the first symbol sequence.

As one embodiment, the technical feature of "bits with a bit value equal to "1" in the first bit sequence and numerical values in the first feature sequence are in one-to-one correspondence" comprises the following meanings: all bits with a bit value equal to "1" comprised in the first bit sequence are sequentially indexed according to 0, 1, 2..., the numerical values comprised in the first feature sequence are sequentially indexed according to 0, 1, 2..., and a multiplication operation is performed between bits with a bit value equal to "1" in the first bit sequence with equal index values and the numerical values in the first feature sequence.

As one embodiment, the length of the first feature sequence is equal to the number of bits with a bit value equal to "1" in the first bit sequence.

## Embodiment 8

Embodiment 8 illustrates a schematic diagram of feature coding and bit repetition according to one embodiment of the present application, as shown in FIG. 8. In FIG. 8, in a method A and a method B, each small block represents 1 bit, and a digit therein represents a bit value; and in each method, bits in an uppermost row represent a first bit block, and bits in a bottommost row represent a first bit sequence.

In Embodiment 8, the first bit block in the present application is subjected to at least feature coding and bit repetition so as to be used for generating the first bit sequence in the present application; the feature encoding encodes bits with the bit value equal to "1" into "10" and encodes bits with a bit value equal to "0" into "01", or the feature encoding encodes the bits with a bit value equal to "1" into "01" and encodes bits with a bit value equal to "0" into "10"; and the number of repetition of the bit repetition is related to the number of symbols comprised in the first symbol sequence in the present application.

As one embodiment, the first bit sequence is generated through feature coding and bit repetition, which improves the detection performance of a wake-up signal while ensuring compatibility with an existing OFDM system.

As one embodiment, the feature coding is Manchester coding.

As one embodiment, the feature coding is a type of channel coding.

As one embodiment, the feature coding is a type of source coding.

As one embodiment, the feature coding is before the bit repetition.

As one embodiment, the feature coding is after the bit repetition.

As one embodiment, there are other operations (or transformation or processing) between the feature coding and the bit repetition.

As one embodiment, there are no other operations (or transformation or processing) between the feature coding and the bit repetition.

As one embodiment, the output of the feature coding serves as the input of the bit repetition.

As one embodiment, the output of the bit repetition serves as the input of the feature coding.

As one embodiment, the first bit block is only subjected to the feature coding and the bit repetition to generate the first bit sequence.

As one embodiment, the first bit block is also subjected to operations (or transformation or processing) other than the feature coding and the bit repetition to generate the first bit sequence.

As one embodiment, the bit repetition is repetition coding.

As one embodiment, the bit repetition is Simplex coding.

As one embodiment, the bit repetition is repetition coding without placeholder bits.

As one embodiment, the bit repetition is Simplex coding without placeholder bits.

As one embodiment, the bit repetition is channel coding of small block length.

As one embodiment, the bit repetition is bit block repetition.

As one embodiment, the bit repetition is continuous repetition of one bit followed by continuous repetition of a next bit.

As one embodiment, the bit repetition is concatenation of multiple identical bit blocks.

As one embodiment, the bit repetition is continuous repetition of each bit.

As one embodiment, the bit repetition is discrete repetition of each bit.

As one embodiment, one bit block of $b_0$, $b_1$, $b_2$,...$b_n$ is subjected to the bit repetition to obtain $b_0$, $b_1$, $b_2$,...$b_n$, $b_0$, $b_1$, $b_2$,...$b_n$, $b_0$, $b_1$, $b_2$,...$b_n$... .

As one embodiment, one bit block of $b_0$, $b_1$, $b_2$,...$b_n$ is subjected to the bit repetition to obtain $b_0$, $b_0$, $b_0$,...$b_0$, $b_1$, $b_1$, $b_1$,...$b_1$,..., $b_n$, $b_n$, $b_{n2}$,...$b_n$.

As one embodiment, one bit block of $b_0$, $b_1$, $b_2$,...$b_n$ is subjected to the bit repetition to obtain $b_0,b_0,b_1,b_1,...,b_n,b_n,b_0,b_0,b_1,b_1,...,b_n,b_n,..,b_0,b_0,b_1,b_1,...,b_n,b_n$.

As one embodiment, the first bit block is also subjected to scrambling to generate the first bit sequence.

As one embodiment, the first bit block is also subjected to interleaving to generate the first bit sequence.

As one embodiment, the first bit block is also subjected to CRC adding to generate the first bit sequence.

As one embodiment, the first bit block is also subjected to channel coding to generate the first bit sequence.

As one embodiment, the technical feature of "the feature coding codes a bit with a bit value equal to "1" into "10" and codes a bit with a bit value equal to "0" into "01", or the feature coding codes the bit with the bit value equal to "1" into "01" and codes the bit with the bit value equal to "0" into "10"" comprises the following meanings: the output of a coder of the feature coding to which a "1" bit is input is "10" and the output of the coder of the feature coding to which a "0" bit is input is "01", or the output of the coder of the feature coding to which the "1" bit is input is "01" and the output of the coder of the feature coding to which the "0" bit is input is "10".

As one embodiment, the technical feature of "the feature coding codes a bit with a bit value equal to "1" into "10" and codes a bit with a bit value equal to "0" into "01", or the feature coding codes the bit with the bit value equal to "1" into "01" and codes the bit with the bit value equal to "0" into "10"" comprises the following meanings: The feature coding codes a bit value "1" into a bit value "10" and codes a bit value "0" into "01", or the feature coding codes the bit value "1" into "01" and codes the bit value "0" into "10".

As one embodiment, the number of repetition of the bit repetition refers to the number of repetition of one bit.

As one embodiment, the number of repetition of the bit repetition refers to the number of bits obtained after one bit is subjected to bit repetition.

As one embodiment, the number of repetition of the bit repetition refers to the number of repetition of all bits that are subjected to bit repetition.

As one embodiment, the number of repetition of the bit repetition refers to the number of repetition of some bits that are subjected to bit repetition.

As one embodiment, the number of repetition of the bit repetition refers to the number of repetition of a bit with a greatest number of repetition among all bits that are subjected to bit repetition.

As one embodiment, the number of repetition of the bit repetition refers to the number of repeated transmissions of a bit that has been repeatedly sent for the smallest number of times among all bits that are subjected to the bit repetition.

As one embodiment, the number of repetition of the bit repetition refers to the number of repetition of one bit in one continuous repetition.

As one embodiment, the technical feature of "the number of repetition of the bit repetition is related to the number of symbols comprised in the first symbol sequence" comprises the following meaning: the number of repetition of the bit repetition is linearly related to the number of the symbols comprised in the first symbol sequence.

As one embodiment, the technical feature of "the number of repetition of the bit repetition is related to the number of symbols comprised in the first symbol sequence" comprises the following meaning: the number of repetition of the bit repetition is related to a ratio of the number of the symbols comprised in the first symbol sequence.

As one embodiment, the technical features of "the number of repetition of the bit repetition is related to the number of symbols comprised in the first symbol sequence" and "the number of repetition of the bit repetition is related to the number of time-frequency resources occupied by the target wake-up signal" are equivalent or can be used interchangeably.

As one embodiment, the technical feature of "the number of repetition of the bit repetition is related to the number of symbols comprised in the first symbol sequence" comprises the following meaning: there is a functional relationship between the number of repetition of the bit repetition and the number of the symbols comprised in the first symbol sequence.

As one embodiment, the technical feature of "the number of repetition of the bit repetition is related to the number of symbols comprised in the first symbol sequence" comprises the following meaning: there is a mapping relationship between the number of repetition of the bit repetition and the number of the symbols comprised in the first symbol sequence.

As one embodiment, the technical feature of "the number of repetition of the bit repetition is related to the number of symbols comprised in the first symbol sequence" comprises the following meaning: the number of the symbols comprised in the first symbol sequence is used for determining (or calculating) the number of repetition of the bit repetition.

As one embodiment, the technical feature of "the number of repetition of the bit repetition is related to the number of symbols comprised in the first symbol sequence" comprises the following meaning: the number of repetition of the bit repetition is equal to a ratio value between the number of the symbols comprised in the first symbol sequence and the length of the first bit sequence.

As one embodiment, the technical feature of "the number of repetition of the bit repetition is related to the number of symbols comprised in the first symbol sequence" comprises the following meaning: the number of repetition of the bit repetition is linearly correlated with the number of the symbols comprised in the first symbol sequence and the length of the first bit sequence.

As one embodiment, the technical feature of "the number of repetition of the bit repetition is related to the number of symbols comprised in the first symbol sequence" comprises the following meaning: the number of repetition of the bit repetition is equal to a ratio value between the number of the symbols comprised in the first symbol sequence and the number of the bits comprised in the first bit block.

As one embodiment, the technical feature of "the number of repetition of the bit repetition is related to the number of symbols comprised in the first symbol sequence" comprises the following meaning: the number of repetition of the bit repetition is linearly correlated with the number of the symbols comprised in the first symbol sequence and the number of the bits comprised in the first bit block.

As one embodiment, the technical feature of "the number of repetition of the bit repetition is related to the number of symbols comprised in the first symbol sequence" comprises the following meaning: the number of repetition of the bit repetition is equal to a ratio value between the number of the symbols comprised in the first symbol sequence and the length of the first feature sequence.

As one embodiment, the technical feature of "the number of repetition of the bit repetition is related to the number of symbols comprised in the first symbol sequence" comprises the following meaning: the number of repetition of the bit repetition is linearly correlated with the number of the symbols comprised in the first symbol sequence and the length of the first feature sequence.

## Embodiment 9

Embodiment 9 illustrates a schematic diagram of a relationship between a target wake-up signal and a first occasion according to one embodiment of the present application, as shown in FIG. 9. In FIG. 9, a horizontal axis represents time, a thick-line block rectangle filled with intersected lines represents the target wake-up signal, a thin-line block rectangle filled with cross lines represents the first occasion, and each unfilled rectangle represents an occasion associated with the target wake-up signal other than the first occasion.

In Embodiment 9, an identity of the first node device in the present application is used for determining the first occasion, and whether the target wake-up signal in the present application carries an indication of a device group to which the first node device belongs is used for determining whether to monitor the first signaling in the present application in the first occasion; and the target wake-up signal is earlier than the first occasion in a time domain.

As one embodiment, the first occasion is a paging occasion (PO).

As one embodiment, the first occasion is a paging occasion associated with the first node device in the present application.

As one embodiment, the first occasion is a paging occasion associated with user equipment other than the first node device in the present application.

As one embodiment, the first occasion is a paging occasion associated with at least one piece of user equipment comprising the first node device in the present application.

As one embodiment, the first occasion is not a paging occasion associated with the first node device in the present application.

As one embodiment, the first occasion is a PEI occasion.

As one embodiment, the first occasion is a PS (Power Saving) PDCCH monitoring occasion.

As one embodiment, the first occasion is a PDCCH monitoring occasion with PS-RNTI scrambled CRC.

As one embodiment, the first occasion is a PEI occasion associated with the first node device in the present application.

As one embodiment, the first occasion is a PEI occasion associated with at least one piece of user equipment comprising the first node device in the present application.

As one embodiment, the first occasion comprises at least one PDCCH monitoring occasion.

As one embodiment, the first occasion comprises multiple slots that may send paging DCI.

As one embodiment, the first occasion is a paging frame (PF).

As one embodiment, an identity of the first node device is TMSI.

As one embodiment, an identity of the first node device is 5G-S-TMSI.

As one embodiment, an identity of the first node device is RNTI.

As one embodiment, an identity of the first node device is one ID allocated to the first node device.

As one embodiment, an identity of the first node device is an IMSI (International Mobile Subscriber Identity).

As one embodiment, the technical feature of "an identity of the first node device is used for determining the first occasion" comprises the following meaning: the identity of the first node device is used by the first node device for determining the first occasion.

As one embodiment, the technical feature of "an identity of the first node device is used for determining the first occasion" comprises the following meaning: the identity of the first node device is used for determining the first occasion according to a predefined operation rule.

As one embodiment, the technical feature of "an identity of the first node device is used for determining the first occasion" comprises the following meaning: the identity of the first node device is used for determining a paging occasion (PO) associated with the first occasion.

As one embodiment, the technical feature of "an identity of the first node device is used for determining the first occasion" comprises the following meaning: the identity of the first node device is used for determining a paging frame (PF) associated with the first occasion.

As one embodiment, the technical feature of "an identity of the first node device is used for determining the first occasion" comprises the following meaning: the identity of the first node device is used for determining a paging occasion (PO) associated with the first occasion, and the paging occasion associated with the first occasion and a configurable or predefined time domain offset are together used for determining the first occasion.

As one embodiment, the technical feature of "an identity of the first node device is used for determining the first occasion" comprises: the following relationship is satisfied:

$$(\text{SFN} + \text{PF\_offset}) \bmod T = (T \operatorname{div} N)*(\text{UE\_ID} \bmod N)$$

wherein SFN represents the PF comprising the first occasion or comprising a starting point of the first occasion, UE_ID represents the identity of the first node device, T represents a DRX cycle, N represents the number of PFs in the DRX cycle, and PF_offset represents a predefined or configured offset value.

As one embodiment, the technical feature of "an identity of the first node device is used for determining the first occasion" comprises: the following relationship is satisfied:

$$i\_s = \operatorname{floor}(\text{UE\_ID}/N) \bmod Ns$$

wherein i_s represents an index of the first occasion, UE_ID represents an identity of the first node device, N represents the number of PFs in a DRX cycle, and Ns is the number of POs for one PF.

As one embodiment, the technical feature of "an identity of the first node device is used for determining the first occasion" comprises the following meaning: the first occasion is a PDCCH monitoring occasion, and the identity of the first node device is used for determining an index and/or type of a search space set to which the first occasion belongs.

As one embodiment, one device group to which the first node device belongs only comprises the first node device.

As one embodiment, one device group to which the first node device belongs also comprises a device other than the first node device.

As one embodiment, one device group to which the first node device belongs comprises at least one device.

As one embodiment, any one device comprised in one device group to which the first node device belongs is user equipment (UE).

As one embodiment, "whether the target wake-up signal carries an indication of a device group to which the first node device belongs" comprises: whether the target wake-up signal carries an index or identity of the device group to which the first node device belongs.

As one embodiment, "whether the target wake-up signal carries an indication of a device group to which the first node device belongs" comprises: whether a bit block carried by the target wake-up signal comprises at least one bit used for the device group to which the first node device belongs.

As one embodiment, "whether the target wake-up signal carries an indication of a device group to which the first node device belongs" comprises: whether a bit block used for generating the target wake-up signal comprises at least one bit used for the device group to which the first node device belongs.

As one embodiment, "whether the target wake-up signal carries an indication of a device group to which the first node device belongs" comprises: whether a bit block used for generating the target wake-up signal comprises at least one bit corresponding to the device group to which the first node device belongs.

As one embodiment, "whether the target wake-up signal carries an indication of a device group to which the first node device belongs" comprises: whether the first bit block comprises at least one bit indicating the device group to which the first node device belongs.

As one embodiment, "whether the target wake-up signal carries an indication of a device group to which the first node device belongs" comprises: whether an identity or index of the device group to which the first node device belongs is used for determining (or calculating) a value of at least one parameter of the first feature sequence.

As one embodiment, "whether the target wake-up signal carries an indication of a device group to which the first node device belongs" comprises: whether the first bit block comprises at least one bit indicating the device group to which the first node device belongs and an identity or index of the device group to which the first node device belongs is used for determining (or calculating) a value of at least one parameter of the first feature sequence.

As one embodiment, "whether the target wake-up signal carries an indication of a device group to which the first node device belongs" comprises: whether a bit block comprising bits used for explicitly or implicitly indicating the device group to which the first node device belongs is used for generating the target wake-up signal.

As one embodiment, "whether the target wake-up signal carries an indication of a device group to which the first node device belongs" comprises: whether the target wake-up signal is used for waking up at least one device comprised in the device group to which the first node device belongs.

As one embodiment, "whether the target wake-up signal carries an indication of the device group to which the first node device belongs" comprises: whether the target wake-up signal is used for at least indicating at least one piece of user equipment comprised in the device group to which the first node device belongs to monitor paging PDCCH or PEI.

As one embodiment, "whether the target wake-up signal carries an indication of a device group to which the first node device belongs" comprises: whether the target wake-up signal is used for waking up a complete baseband processing function of at least one piece of user equipment comprised in the device group to which the first node device belongs.

As one embodiment, the technical feature of "whether the target wake-up signal carries an indication of a device group to which the first node device belongs is used for determining whether to monitor the first signaling in the first occasion" comprises the following meaning: whether the target wake-up signal carries the indication of the device group to which the first node device belongs and is used by the first node device for determining whether to monitor the first signaling in the first occasion.

As one embodiment, the technical feature of "whether the target wake-up signal carries an indication of a device group to which the first node device belongs is used for determining whether to monitor the first signaling in the first occasion" comprises the following meaning: whether the target wake-up signal carries the indication of the device group to which the first node device belongs is used for determining whether to monitor the first signaling whose time domain resources belong to (or correspond to or are associated with) the first occasion.

As one embodiment, the technical feature of "whether the target wake-up signal carries an indication of a device group to which the first node device belongs is used for determining whether to monitor the first signaling in the first occasion" comprises the following meaning: whether the target wake-up signal carries the indication of the device group to which the first node device belongs is used for determining whether it is required to monitor the first signaling in the first occasion.

As one embodiment, the technical feature of "whether the target wake-up signal carries an indication of a device group to which the first node device belongs is used for determining whether to monitor the first signaling in the first occasion" comprises the following meanings: when the target wake-up signal carries the indication of the device group to which the first node device belongs, the first node device monitors the first signaling in the first occasion; otherwise, the first node device abandons monitoring the first signaling in the first occasion.

As one embodiment, the technical feature of "whether the target wake-up signal carries an indication of a device group to which the first node device belongs is used for determining whether to monitor the first signaling in the first occasion" comprises the following meanings: when the target wake-up signal carries the indication of the device group to which the first node device belongs, the first node device monitors the first signaling in the first occasion; otherwise, the first node device is not required to monitor the first signaling in the first occasion.

As one embodiment, the technical feature of "whether the target wake-up signal carries an indication of a device group to which the first node device belongs is used for determining whether to monitor the first signaling in the first occasion" comprises the following meanings: whether the target wake-up signal carries the indication of the device group to which the first node device belongs is used for determining whether to monitor the second signaling in the present application, and the second signaling is used for determining whether to monitor the first signaling in the first occasion.

As one embodiment, the technical feature of "whether the target wake-up signal carries an indication of a device group to which the first node device belongs is used for determining whether to monitor the first signaling in the first occasion" comprises the following meanings: when the target wake-up signal carries the indication of the device group to which the first node device belongs, the first node device monitors the second signaling in the present application, and the second signaling is used for determining whether to monitor the first signaling in the first occasion; otherwise, the first node device is not required to monitor the first signaling in the first occasion.

As one embodiment, the technical feature of "whether the target wake-up signal carries an indication of a device group to which the first node device belongs is used for determining whether to monitor the first signaling in the first occasion" comprises the following meanings: when the first bit block comprises at least one bit indicating the device group to which the first node device belongs and an identity or index of the device group to which the first node device belongs is used for determining (or calculating) a value of at least one parameter of the first feature sequence, the first node device monitors the first signaling in the first occasion; otherwise, the first node device is not required to monitor the first signaling in the first occasion.

As one embodiment, the technical feature of "whether the target wake-up signal carries an indication of a device group to which the first node device belongs is used for determining whether to monitor the first signaling in the first occasion" comprises the following meanings: when the first bit block comprises at least one bit indicating the device group to which the first node device belongs and an identity or index of the device group to which the first node device belongs is used for determining (or calculating) a value of at least one parameter of the first feature sequence, the first node device monitors the second signaling in the present application, and the second signaling is used for determining whether to monitor the first signaling in the first occasion; otherwise, the first node device is not required to monitor the first signaling in the first occasion.

As one embodiment, whether the first feature sequence is used for determining monitoring of the first signaling in the first occasion depends on the capability of the first node device.

As one embodiment, an end moment of the target wake-up signal in a time domain is earlier than a start moment of the first occasion.

As one embodiment, a start moment of the target wake-up signal in a time domain is earlier than a start moment of the first occasion.

As one embodiment, an end moment of the target wake-up signal in a time domain is earlier than an end moment of the first occasion.

As one embodiment, the time interval length between the target wake-up signal and the first occasion in a time domain is predefined or configured.

As one embodiment, the time interval length between the target wake-up signal and the first occasion in a time domain is not less than a target threshold, and the target threshold depends on the capability of the first node device.

## Embodiment 10

Embodiment 10 illustrates a schematic diagram of a relationship between second signaling and first signaling according to one embodiment of the present application, as shown in FIG. 10. In FIG. 10, a horizontal axis represents time, a rectangle filled with intersected lines represents a target wake-up signal, a rectangle filled with oblique lines represents the second signaling, a rectangle filled with cross lines represents the first signaling, and a dotted line with an arrow represents a relationship of determining whether to monitor.

In Embodiment 10, the second signaling in the present application is used for indicating whether to monitor the first signaling in the present application; and the target wake-up signal in the present application is used for determining whether to monitor the second signaling.

As one embodiment, by indicating whether to monitor the second signaling through the wake-up signal, monitoring of PEI can be flexibly configured, and the false alarm probability of wake-up is reduced while backward compatibility is ensured.

As one embodiment, the second signaling is a PDCCH.

As one embodiment, the second signaling is a PDCCH used for paging an advanced indication.

As one embodiment, the second signaling comprises all or part of fields in one DCI format.

As one embodiment, the second signaling is a PDCCH with PEI-RNTI scrambled CRC.

As one embodiment, the second signaling is a PDCCH with PS-RNTI scrambled CRC.

As one embodiment, the second signaling comprises all or part of fields in a DCI format 2_6.

As one embodiment, the second signaling comprises all or part of fields in a DCI format 2_7.

As one embodiment, the second signaling is carried by a PDSCH (Physical Downlink Shared Channel).

As one embodiment, the second signaling carries high-layer information.

As one embodiment, the second signaling carries physical layer information.

As one embodiment, the second signaling carries core network information.

As one embodiment, the two expressions of "monitoring the second signaling" and "receiving information carried by the second signaling" are equivalent or can be used interchangeably.

As one embodiment, the two expressions of "monitoring the second signaling" and "decoding the second signaling" are equivalent or can be used interchangeably.

As one embodiment, the two expressions of "monitoring the second signaling" and "blindly decoding the second signaling" are equivalent or can be used interchangeably.

As one embodiment, the two expressions of "monitoring the second signaling" and "decoding and CRC the second signaling" are equivalent or can be used interchangeably.

As one embodiment, the two expressions of "monitoring the second signaling" and "performing decoding and RNTI (Radio Network Temporary Identity) scrambled CRC on the second signaling" are equivalent or can be used interchangeably.

As one embodiment, the two expressions of "monitoring the second signaling" and "decoding the second signaling for one or more DCI (Downlink Control Information) format(s)" are equivalent or can be used interchangeably.

As one embodiment, the two expressions of "monitoring the second signaling" and "decoding the second signaling for one or more DCI payload sizes" are equivalent or can be used interchangeably.

As one embodiment, the technical feature of "the second signaling is used for indicating whether to monitor the first signaling" comprises the following meaning: the second signaling is used by a network node for indicating whether the first node device in the present application monitors the first signaling.

As one embodiment, the technical feature of "the second signaling is used for indicating whether to monitor the first signaling" comprises the following meaning: the second signaling is used for indicating whether to monitor the first signaling in the first occasion in the present application.

As one embodiment, the technical feature of "the second signaling is used for indicating whether to monitor the first signaling" comprises the following meaning: the second signaling is used by a core network for indicating whether to monitor the first signaling.

As one embodiment, the technical feature of "the second signaling is used for indicating whether to monitor the first signaling" comprises the following meaning: when the second signaling is monitored, the second signaling is used for indicating whether to monitor the first signaling.

As one embodiment, the technical feature of "the second signaling is used for indicating whether to monitor the first signaling" comprises the following meaning: when the second signaling is detected, the second signaling is used for indicating whether to monitor the first signaling.

As one embodiment, the technical feature of "the second signaling is used for indicating whether to monitor the first signaling" comprises the following meaning: when the second signaling is monitored and detected, the second signaling is used for indicating whether to monitor the first signaling.

As one embodiment, the technical feature of "the second signaling is used for indicating whether to monitor the first signaling" comprises the following meaning: when the second signaling is monitored and detected, the second signaling is used for indicating whether to monitor the first signaling; otherwise, the target wake-up signal is used for determining whether to monitor the first signaling.

As one embodiment, the technical feature of "the second signaling is used for indicating whether to monitor the first signaling" comprises the following meaning: the second signaling is used for indicating at least one device group, and whether the first node device belongs to 1 device group indicated by the second signaling is used for determining whether to monitor the first signaling.

As one embodiment, the technical feature of "the second signaling is used for indicating whether to monitor the first signaling" comprises the following meanings: the second signaling is used for indicating at least one device group, and whether the first node device belongs to 1 device group indicated by the second signaling and a device group indicated by the target wake-up signal at the same time is used for determining whether to monitor the first signaling.

As one embodiment, the technical feature of "the second signaling is used for indicating whether to monitor the first signaling" comprises the following meanings: the second signaling is used for indicating at least one device group, and whether the first node device belongs to 1 device group indicated by the second signaling and whether the W1 wake-up signals in the present application are all detected and all carry a device group comprising the first node device are used for determining whether to monitor the first signaling.

As one embodiment, the technical feature of "the second signaling is used for indicating whether to monitor the first signaling" comprises the following meanings: the second signaling is used for indicating at least one device group; when the first node device belongs to 1 device group indicated by the second signaling, the first node device monitors the first signaling; otherwise, the first node device is not required to monitor the first signaling.

As one embodiment, the technical feature of "the second signaling is used for indicating whether to monitor the first signaling" comprises the following meanings: the second signaling is used for indicating at least one device group; when the first node device belongs to 1 device group indicated by the second signaling and the W1 wake-up signals in the present application are all detected and all carry a device group comprising the first node device, the first node device monitors the first signaling; otherwise, the first node device is not required to monitor the first signaling.

As one embodiment, when the second signaling is monitored, the second signaling is used for indicating whether to monitor the first signaling.

As one embodiment, when the second signaling is monitored and detected, the second signaling is used for indicating whether to monitor the first signaling.

As one embodiment, "monitoring the first signaling" and "the first node device is required to monitor the first signaling" are equivalent or can be used interchangeably.

As one embodiment, "monitoring the first signaling" and "the first node device expects that the first signaling is sent" are equivalent or can be used interchangeably.

As one embodiment, "not monitoring the first signaling" and "the first node device is not required to monitor the first signaling" are equivalent or can be used interchangeably.

As one embodiment, "not monitoring the first signaling" and "the first node device does not expect that the first signaling is sent" are equivalent or can be used interchangeably.

As one embodiment, "monitoring the second signaling" and "the first node device is required to monitor the second signaling" are equivalent or can be used interchangeably.

As one embodiment, "monitoring the second signaling" and "the first node device expects that the second signaling is sent" are equivalent or can be used interchangeably.

As one embodiment, "not monitoring the second signaling" and "the first node device is not required to monitor the second signaling" are equivalent or can be used interchangeably.

As one embodiment, "not monitoring the second signaling" and "the first node device does not expect that the second signaling is sent" are equivalent or can be used interchangeably.

As one embodiment, the technical feature of "the target wake-up signal is used for determining whether to monitor the second signaling" comprises the following meaning: the target wake-up signal is used by the first node device in the present application for determining whether to monitor the second signaling.

As one embodiment, the technical feature of "the target wake-up signal is used for determining whether to monitor the second signaling" comprises the following meaning: all or part of bits comprised in the first bit block are used for explicitly or implicitly indicating whether to monitor the second signaling.

As one embodiment, the technical feature of "the target wake-up signal is used for determining whether to monitor the second signaling" comprises the following meaning: the first feature sequence is used for explicitly or implicitly indicating whether to monitor the second signaling.

As one embodiment, the technical feature of "the target wake-up signal is used for determining whether to monitor the second signaling" comprises the following meaning: whether to monitor the second signaling is related to modulation (OOK or FSK) used for generating the target wake-up signal.

As one embodiment, the technical feature of "the target wake-up signal is used for determining whether to monitor the second signaling" comprises the following meaning: whether to monitor the second signaling is related to the number of bits carried by the target wake-up signal.

As one embodiment, the technical feature of "the target wake-up signal is used for determining whether to monitor the second signaling" comprises the following meaning: whether to monitor the second signaling is related to the number or location of time-frequency resources occupied by the target wake-up signal.

As one embodiment, the technical feature of "the target wake-up signal is used for determining whether to monitor the second signaling" comprises the following meaning: whether to monitor the second signaling is related to a device group targeted by the target wake-up signal.

As one embodiment, the technical feature of "the target wake-up signal is used for determining whether to monitor the second signaling" comprises the following meaning: whether to monitor the second signaling is related to a device group waken by the target wake-up signal.

As one embodiment, the technical feature of "the target wake-up signal is used for determining whether to monitor the second signaling" comprises the following meaning: whether to monitor the second signaling is related to user equipment waken by the target wake-up signal.

As one embodiment, the technical feature of "the target wake-up signal is used for determining whether to monitor the second signaling" comprises the following meaning: all or part comprised in the first information block is used for indicating whether the target wake-up signal is used for determining whether to monitor the second signaling.

As one embodiment, the technical feature of "the target wake-up signal is used for determining whether to monitor the second signaling" comprises the following meaning: when all or part comprised in the first information block enables or turns on the target wake-up signal to determine whether to monitor the second signaling, whether to monitor the second signaling depends on the target wake-up signal; otherwise, whether to monitor the second signaling depends on a configuration or indication of RRC signaling.

As one embodiment, the technical feature of "the target wake-up signal is used for determining whether to monitor the second signaling" comprises the following meaning: when all or part comprised in the first information block enables or turns on the target wake-up signal to determine whether to monitor the second signaling, whether to monitor the second signaling depends on the target wake-up signal; otherwise, whether to monitor the second signaling is predefined or default.

As one embodiment, the technical feature of "the target wake-up signal is used for determining whether to monitor the second signaling" comprises the following meaning: when all or part comprised in the first information block enables or turns on the target wake-up signal to determine whether to monitor the second signaling, whether to monitor the second signaling depends on the target wake-up signal; otherwise, whether to monitor the second signaling depends on the capability of the first node device.

As one embodiment, the target wake-up signal is used for determining whether to monitor the second signaling depends on the capability of the first node device.

As one embodiment, the technical feature of "the target wake-up signal is used for determining whether to monitor the second signaling" comprises the following meaning: the number of wake-up signals carrying a device group comprising the first node device in the W1 wake-up signals in the present application is used for determining whether to monitor the second signaling.


**Embodiment 11**

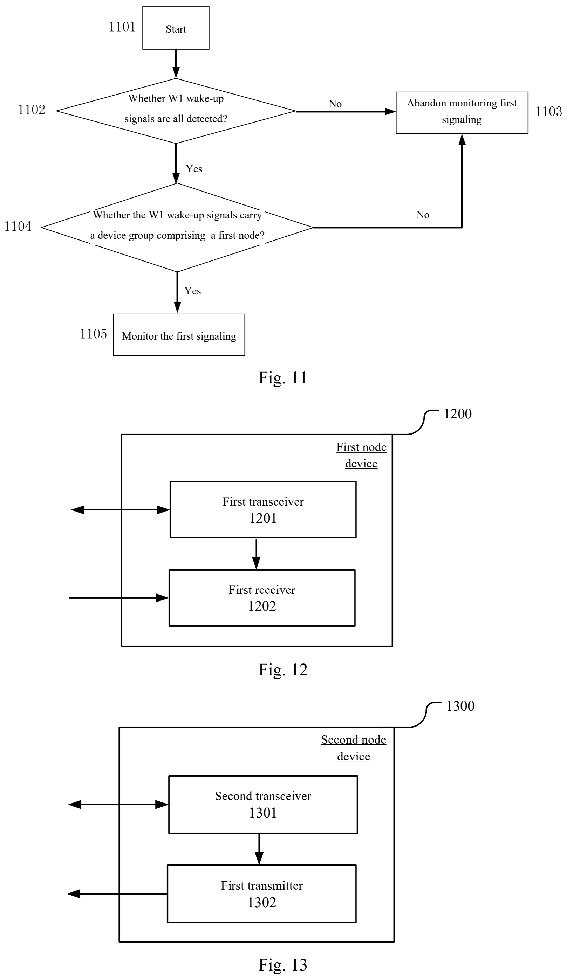

Embodiment 11 illustrates a schematic diagram of a relationship between W1 wake-up signals and first signaling according to one embodiment of the present application, as shown in FIG. 11. In FIG. 11, each rectangle represents one operation, each diamond represents one judgment, starting from step 1101, it is judged whether all W1 wake-up signals are detected in step 1102, monitoring of the first signaling is abandoned in step 1103, it is judged whether all W1 wake-up signals carry a device group comprising a first node in step 1104, and first signaling is monitored in step 1105; and it should be particularly pointed out that a sequence number of a step is only used as a step identity in one example, and does not limit an execution order among the steps.

In Embodiment 11, the target wake-up signal in the present application is one of W1 wake-up signals, the number of wake-up signals carrying a device group comprising the first node device in the present application in the W1 wake-up signals is used for determining whether to monitor the first signaling in the present application, and the W1 is a positive integer greater than 1.

As one embodiment, by monitoring multiple wake-up signals at the same time, the probability of false wake-up is reduced.

As one embodiment, whether to wake up is judged by the number of wake-up signals carrying a device group comprising the same device in multiple wake-up signals, so as to further optimize power consumption.

As one embodiment, the W1 is equal to 2.

As one embodiment, the W1 is equal to a positive integer power of 2.

As one embodiment, the W1 is greater than 2.

As one embodiment, the W1 is not greater than 8.

As one embodiment, any one of the W1 wake-up signals is a low power wake up signal (LP-WUS).

As one embodiment, any one of the W1 wake-up signals is a square wave signal.

As one embodiment, any one of the W1 wake-up signals is a frequency modulation signal.

As one embodiment, any one of the W1 wake-up signals is a signal using OOK (On/Off Keying).

As one embodiment, any one of the W1 wake-up signals is a signal using FSK (Frequency Shift Keying).

As one embodiment, any one of the W1 wake-up signals is a signal using an OOK and constant envelope sequence.

As one embodiment, any one of the W1 wake-up signals is a signal using an FSK and constant envelope sequence.

As one embodiment, any one of the W1 wake-up signals is a signal for waking up a baseband processing function of a receiver.

As one embodiment, any one of the W1 wake-up signals is a signal for waking up a complete baseband processing function of a receiver.

As one embodiment, any one of the W1 wake-up signals is a signal for waking up monitoring or receiving of a PDCCH (Physical Downlink Control Channel).

As one embodiment, any one of the W1 wake-up signals is a baseband signal or a radio frequency signal.

As one embodiment, any one of the W1 wake-up signals is generated by OFDM.

As one embodiment, the W1 wake-up signals are used for reducing power consumption.

As one embodiment, the W1 wake-up signals are used in an RRC (Radio Resource Control) idle state or an RRC inactive state.

As one embodiment, the W1 wake-up signals can be used in the RRC (Radio Resource Control) idle state, the RRC inactive state and an RRC connected state.

As one embodiment, one bit block and a feature sequence are together subjected to OOK so as to be used for generating one of the W1 wake-up signals.

As one embodiment, one bit block and a feature sequence are together subjected to FSK so as to be used for generating one of the W1 wake-up signals.

As one embodiment, one bit block is subjected to at least one or more of OOK modulation, transform precoding, mapping to physical resources, OFDM baseband signal generation, modulation and upconversion to generate one of the W1 wake-up signals.

As one embodiment, one bit block is subjected to at least one or more of FSK modulation, transform precoding, mapping to physical resources, OFDM baseband signal generation, modulation and upconversion to generate one of the W1 wake-up signals.

As one embodiment, one bit block is subjected to at least one or more of OOK modulation, sequence generation/modulation, transform precoding, mapping to physical resources, OFDM baseband signal generation, modulation and upconversion to generate one of the W1 wake-up signals.

As one embodiment, one bit block is subjected to at least one or more of FSK modulation, sequence generation/modulation, transform precoding, mapping to physical resources, OFDM baseband signal generation, modulation and upconversion to generate one of the W1 wake-up signals.

As one embodiment, one bit block is subjected to at least one or more of oversampling or spreading/extension or repetition, transform precoding, mapping to physical resources, OFDM baseband signal generation, modulation and upconversion to generate one of the W1 wake-up signals.

As one embodiment, one bit block is subjected to at least one or more of oversampling or spreading/extension or repetition, sequence generation/modulation, transform precoding, mapping to physical resources, OFDM baseband signal generation, modulation and up-conversion to generate one of the W1 wake-up signals.

As one embodiment, the first node device monitors each of the W1 wake-up signals.

As one embodiment, time domain resources respectively occupied by any two of the W1 wake-up signals are orthogonal.

As one embodiment, time-frequency resources respectively occupied by any two of the W1 wake-up signals are orthogonal.

As one embodiment, time-frequency resources occupied by any two of the W1 wake-up signals are different.

As one embodiment, there are two wake-up signals in the W1 wake-up signals that occupy the same time-frequency resources.

As one embodiment, there are two wake-up signals in the W1 wake-up signals that occupy the same time-frequency resources but carry different sequences.

As one embodiment, time division multiplexing (TDM) is used between any two of the W1 wake-up signals.

As one embodiment, there are two wake-up signals in the W1 wake-up signals that are subjected to code division multiplexing (CDM).

As one embodiment, there are two wake-up signals in the W1 wake-up signals that are subjected to space division multiplexing (SDM).

As one embodiment, one wake-up signal carries a device group comprising the first node device, which means: the wake-up signal carries an identity (or index) of the device group comprising the first node device.

As one embodiment, one wake-up signal carries a device group comprising the first node device, which means: the wake-up signal is used for explicitly or implicitly indicating the device group comprising the first node device.

As one embodiment, one wake-up signal carries a device group comprising the first node device, which means: the wake-up signal is used for waking up at least one device in the device group comprising the first node device.

As one embodiment, one wake-up signal carries a device group comprising the first node device, which means: information bits carried by the wake-up signal comprise a bit indicating an identity (or index) of the device group comprising the first node device.

As one embodiment, any one of the W1 wake-up signals only carries 1 device group.

As one embodiment, any one of the W1 wake-up signals carries multiple device groups.

As one embodiment, one of the W1 wake-up signals only carries 1 device group and another one of the W1 wake-up signals carries multiple device groups.

As one embodiment, a maximum value of the number of device groups that can be carried by any one of the W1 wake-up signals is predefined or fixed or configurable or related to the capability of the first node device.

As one embodiment, a maximum value of the number of device groups that can be carried by any one of the W1 wake-up signals is equal to a positive integer power of 2.

As one embodiment, a maximum value of the number of device groups that can be carried by any one of the W1 wake-up signals is equal to 8.

As one embodiment, any two of the W1 wake-up signals carry different device groups respectively.

As one embodiment, any two of the W1 wake-up signals carry different sets of device groups respectively.

As one embodiment, there are two wake-up signals in the W1 wake-up signals that carry exactly the same device groups respectively.

As one embodiment, any two of the W1 wake-up signals carry the same set of device groups.

As one embodiment, the number of device groups carried by any two of the W1 wake-up signals respectively is equal.

As one embodiment, there are two wake-up signals in the W1 wake-up signals that carry unequal numbers of device groups.

As one embodiment, the first node device in the present application assumes or expects that sets of device groups carried by any two of the W1 wake-up signals respectively are the same.

As one embodiment, whether sets of device groups carried by any two of the W1 wake-up signals respectively are the same is configured by signaling.

As one embodiment, sets of device groups carried by any two of the W1 wake-up signals respectively are exactly the same.

As one embodiment, there are two wake-up signals in the W1 wake-up signals that carry different sets of device groups respectively.

As one embodiment, there are two wake-up signals in the W1 wake-up signals, and hopping or altering of device groups is supported between the two wake-up signals.

As one embodiment, any device group carried by one of the W1 wake-up signals is also carried by another wake-up signal.

As one embodiment, there is one of the W1 wake-up signals that carries a set of device groups, the set being a subset of a set of device groups carried by another wake-up signal.

As one embodiment, among device groups respectively carried by the W1 wake-up signals, a nested structure is met.

As one embodiment, any 1 device group carried by any one of the W1 wake-up signals only comprises 1 device.

As one embodiment, any 1 device group carried by any one of the W1 wake-up signals comprises multiple devices.

As one embodiment, 1 device group carried by one of the W1 wake-up signals only comprises 1 device, and 1 device group carried by one of the W1 wake-up signals comprises multiple devices.

As one embodiment, a maximum value of the number of devices comprised in any device group carried by any one of the W1 wake-up signals is predefined or fixed or configurable or related to the capability of the first node device.

As one embodiment, the number of devices comprised in any device group carried by any one of the W1 wake-up signals is configurable or predefined.

As one embodiment, any device comprised in any 1 device group carried by any one of the W1 wake-up signals is user equipment (UE) or a terminal.

As one embodiment, any device comprised in any 1 device group carried by any one of the W1 wake-up signals is user equipment (UE) or a terminal that supports a wake-up signal.

As one embodiment, one device comprised in 1 device group carried by one of the W1 wake-up signals is user equipment (UE) or a terminal that supports a wake-up signal, and one device comprised in 1 device group carried by one of the W1 wake-up signals is user equipment (UE) or a terminal that does not support the wake-up signal (or is traditional or before version 19).

As one embodiment, the number of wake-up signals carrying a device group comprising the first node device in the W1 wake-up signals is the number of wake-up signals carrying an index (or identify) of the device group comprising the first node device in the W1 wake-up signals.

As one embodiment, the number of wake-up signals carrying a device group comprising the first node device in the W1 wake-up signals is the number of wake-up signals carrying the device group index (or identify) assigned to the first node device in the W1 wake-up signals.

As one embodiment, the number of wake-up signals carrying a device group comprising the first node device in the W1 wake-up signals is the number of wake-up signals carrying a device group index (or identify) associated with the first node device in the W1 wake-up signals.

As one embodiment, the W1 wake-up signals only comprise W3 wake-up signals carrying a device group comprising the first node device, the W3 is a non-negative integer not greater than W1, and the number of wake-up signals carrying the device group comprising the first node device in the W1 wake-up signals is equal to the W3.

As one embodiment, the W1 wake-up signals comprise only W3 wake-up signals carrying an index (or identify) of a device group comprising the first node device, the W3 is a non-negative integer not greater than the W1, and the number of wake-up signals carrying the device group comprising the first node device in the W1 wake-up signals is equal to the W3.

As one embodiment, the W1 wake-up signals only comprise W3 wake-up signals detected to carry a device group comprising the first node device, the W3 is a non-negative integer not greater than the W1, and the number of wake-up signals carrying the device group comprising the first node device in the W1 wake-up signals is equal to the W3.

As one embodiment, at least one device group carried by any one of the W3 wake-up signals comprises the first node device, any one of the W3 wake-up signals is one of the W1 wake-up signals, the W3 is a non-negative integer not greater than the W1, and the number of wake-up signals carrying the device group comprising the first node device in the W1 wake-up signals is equal to the W3.

As one embodiment, any one of the W3 wake-up signals carries at least one device group comprising the first node device, any one of the W3 wake-up signals is one of the W1 wake-up signals, any wake-up signal other than the W3 wake-up signals in the W1 wake-up signals carries any device group that does not comprise the first node device, the W3 is a non-negative integer not greater than the W1, and the number of wake-up signals carrying a device group comprising the first node device in the W1 wake-up signals is equal to the W3.

As one embodiment, the number of wake-up signals carrying a device group comprising the first node device in the W1 wake-up signals is equal to the total number of device groups comprising the first node device in the W1 wake-up signals.

As one embodiment, the number of wake-up signals carrying a device group comprising the first node device in the W1 wake-up signals is the total number of wake-up signals carrying the device group comprising the first node device in the W1 wake-up signals.

As one embodiment, the number of wake-up signals carrying a device group comprising the first node device in the W1 wake-up signals is the total number of all wake-up signals carrying the device group comprising the first node device in the W1 wake-up signals.

As one embodiment, the number of wake-up signals carrying a device group comprising the first node device in the W1 wake-up signals is the total number of wake-up signals detected to carry the device group comprising the first node device in the W1 wake-up signals.

As one embodiment, one wake-up signal that is not detected by the first node device is regarded as that the wake-up signal does not carry a device group comprising the first node device.

As one embodiment, one wake-up signal that is not detected by the first node device is not counted in the number of wake-up signals carrying a device group comprising the first node device in the W1 wake-up signals.

As one embodiment, when none of the W1 wake-up signals is detected, the number of wake-up signals carrying a device group comprising the first node device in the W1 wake-up signals is equal to 0.

As one embodiment, when any detected wake-up signal in the W1 wake-up signals does not carry a device group comprising the first node device, the number of wake-up signals carrying the device group comprising the first node device in the W1 wake-up signals is equal to 0.

As one embodiment, the number of wake-up signals carrying a device group comprising the first node device in the W1 wake-up signals may be equal to 0 or greater than 0.

As one embodiment, "the number of wake-up signals carrying a device group comprising the first node device in the W1 wake-up signals is equal to 0" and "any one wake-up signal in the W1 wake-up signals does not carry the device group comprising the first node device" are equivalent or can be used interchangeably.

As one embodiment, "the number of wake-up signals carrying a device group comprising the first node device in the W1 wake-up signals is equal to 0" and "none of the W1 wake-up signals is detected" are equivalent or can be used interchangeably.

As one embodiment, "the number of wake-up signals carrying a device group comprising the first node device in the W1 wake-up signals is equal to 0" and "any one detected wake-up signal in the W1 wake-up signals does not carry the device group comprising the first node device" are equivalent or can be used interchangeably.

As one embodiment, "the number of wake-up signals carrying a device group comprising the first node device in the W1 wake-up signals is equal to 0" and "none of the W1 wake-up signals is detected or any one detected wake-up signal in the W1 wake-up signals does not carry the device group comprising the first node device" are equivalent or can be used interchangeably.

As one embodiment, the number of wake-up signals carrying a device group comprising the first node device in the W1 wake-up signals is not greater than the W1.

As one embodiment, the technical feature of "the number of wake-up signals carrying a device group comprising the first node device in the W1 wake-up signals is used for determining whether to monitor the first signaling" comprises the following meaning: the number of the wake-up signals carrying the device group comprising the first node device in the W1 wake-up signals is used by the first node device in the present application for determining whether to monitor the first signaling.

As one embodiment, the technical feature of "the number of wake-up signals carrying a device group comprising the first node device in the W1 wake-up signals is used for determining whether to monitor the first signaling" comprises the following meaning: the number of the wake-up signals carrying the device group comprising the first node device in the W1 wake-up signals is used for determining whether to monitor the first signaling in the first occasion in the present application.

As one embodiment, the technical feature of "the number of wake-up signals carrying a device group comprising the first node device in the W1 wake-up signals is used for determining whether to monitor the first signaling" comprises the following meaning: the number of the wake-up signals carrying the device group comprising the first node device in the W1 wake-up signals is used by the first node device for determining whether it is required to monitor the first signaling.

As one embodiment, the technical feature of "the number of wake-up signals carrying a device group comprising the first node device in the W1 wake-up signals is used for determining whether to monitor the first signaling" comprises the following meanings: the number of the wake-up signals carrying the device group comprising the first node device in the W1 wake-up signals is used for determining whether to monitor the second signaling in the present application, and the second signaling is used for determining whether to monitor the first signaling.

As one embodiment, the technical feature of "the number of wake-up signals carrying a device group comprising the first node device in the W1 wake-up signals is used for determining whether to monitor the first signaling" comprises the following meanings: the number of the wake-up signals carrying the device group comprising the first node device in the W1 wake-up signals is used for determining whether to monitor PEI, and the PEI is used for determining whether to monitor the first signaling.

As one embodiment, the technical feature of "the number of wake-up signals carrying a device group comprising the first node device in the W1 wake-up signals is used for determining whether to monitor the first signaling" comprises the following meaning: whether the number of the wake-up signals carrying the device group comprising the first node device in the W1 wake-up signals is equal to the W1 is used for determining whether to monitor the first signaling.

As one embodiment, the technical feature of "the number of wake-up signals carrying a device group comprising the first node device in the W1 wake-up signals is used for determining whether to monitor the first signaling" comprises the following meaning: whether the number of the wake-up signals carrying the device group comprising the first node device in the W1 wake-up signals is greater than 0 is used for determining whether to monitor the first signaling.

As one embodiment, the technical feature of "the number of wake-up signals carrying a device group comprising the first node device in the W1 wake-up signals is used for determining whether to monitor the first signaling" comprises the following meanings: whether the number of the wake-up signals carrying the device group comprising the first node device in the W1 wake-up signals is greater than or equal to a feature threshold is used for determining whether to monitor the first signaling, the feature threshold is a non-negative integer not greater than the W1, and the feature threshold is configurable or predefined or fixed or related to the capability of the first node device.

As one embodiment, the technical feature of "the number of wake-up signals carrying a device group comprising the first node device in the W1 wake-up signals is used for determining whether to monitor the first signaling" comprises the following meanings: when at least one wake-up signal in the W1 wake-up signals is detected and carries the device group comprising the first node device, the first node device monitors the first signaling; otherwise, the first node device is not required to monitor the first signaling.

As one embodiment, the technical feature of "the number of wake-up signals carrying a device group comprising the first node device in the W1 wake-up signals is used for determining whether to monitor the first signaling" comprises the following meanings: when none of the W1 wake-up signals is detected or any detected wake-up signal in the W1 wake-up signals does not carry the device group comprising the first node device, the first node device is not required to monitor the first signaling; otherwise, the first node device monitors the first signaling.

As one embodiment, the technical feature of "the number of wake-up signals carrying a device group comprising the first node device in the W1 wake-up signals is used for determining whether to monitor the first signaling" comprises the following meanings: when the W1 wake-up signals are all detected and each of the W1 wake-up signals carries at least one device group comprising the first node device, the first node device monitors the first signaling; otherwise, the first node device is not required to monitor the first signaling.

As one embodiment, the technical feature of "the number of wake-up signals carrying the device group comprising the first node device in the W1 wake-up signals is used for determining whether to monitor the first signaling" comprises the following meaning: when there is 1 wake-up signal in the W1 wake-up signals that is not detected or there is 1 wake-up signal in the W1 wake-up signals that does not carry any device group comprising the first node device, the first node device is not required to monitor the first signaling; otherwise, the first node device monitors the first signaling.

As one embodiment, the technical feature of "the number of wake-up signals carrying a device group comprising the first node device in the W1 wake-up signals is used for determining whether to monitor the first signaling" comprises the following meaning: when the number of wake-up signals carrying the device group comprising the first node device detected in the W1 wake-up signals is greater than or equal to a feature threshold, the first node device monitors the first signaling; otherwise, the first node device is not required to monitor the first signaling; and the feature threshold is a non-negative integer not greater than the W1, and the feature threshold is configurable or predefined or fixed or related to the capability of the first node device.

As one embodiment, the technical feature of "the number of wake-up signals carrying a device group comprising the first node device in the W1 wake-up signals is used for determining whether to monitor the first signaling" comprises the following meanings: when the number of wake-up signals carrying the device group comprising the first node device detected in the W1 wake-up signals is greater than or equal to a feature threshold, the first node device monitors PEI, and the PEI monitored by the first node device is used for determining whether to monitor the first signaling; otherwise, the first node device is not required to monitor the first signaling; and the feature threshold is a non-negative integer not greater than the W1, and the feature threshold is configurable or predefined or fixed or related to the capability of the first node device.

As one embodiment, the first information block is used for determining the W1.

As one embodiment, the first information block is used for determining the number of occasions associated with the W1 wake-up signals.

As one embodiment, information blocks other than the first information block are used for determining the number of wake-up signals associated with the same paging occasion.

As one embodiment, information blocks other than the first information block are used for determining the number of paging occasions associated with the W1 wake-up signals.

**Embodiment 12**

Embodiment 12 illustrates a structural block diagram of a processing apparatus in a first node device of one embodiment, as shown in FIG. 12. In FIG. 12, a processing apparatus 1200 of the first node device comprises a first transceiver 1201 and a first receiver 1202. The first transceiver 1201 comprises a transmitting device/receiving device 456 (comprising an antenna 460), a receiving processor 452, a transmitting processor 455, and a controller/processor 490 in FIG. 4 of the present application; the first receiver 1202 comprises a transmitting device/receiving device 456 (comprising an antenna 460), a receiving processor 452, and a controller/processor 490 in FIG. 4 of the present application;

in Embodiment 12, the first transceiver 1201 receives a first information block; the first receiver 1202 monitors a target wake-up signal, the target wake-up signal is used for determining whether to monitor first signaling, the first information block is used for determining a time-frequency resource occupied by the target wake-up signal, and the first signaling carries control information, wherein the target wake-up signal carries a first bit block, and the first bit block comprises at least one bit; the first bit block is used for generating a first bit sequence, and the first bit sequence comprises a plurality of sequentially indexed bits; a first feature sequence is a sequence comprising a plurality of sequentially indexed numerical values, and products of the plurality of bits comprised in the first bit sequence and corresponding numerical values in the first feature sequence are used for generating a first symbol sequence; and the number of symbols comprised in the first symbol sequence is related to the number of time-frequency resources occupied by the target wake-up signal, and the first symbol sequence is subjected to at least transform precoding so as to be used for generating the target wake-up signal.

As one embodiment, bits in the first bit sequence and numerical values in the first feature sequence are in one-to-one correspondence, or bits in the first bit sequence with a bit value equal to "1" and the numerical values in the first feature sequence are in one-to-one correspondence.

As one embodiment, the first bit block is subjected to at least feature encoding and bit repetition so as to be used for generating the first bit sequence; the feature encoding encodes bits with the bit value equal to "1" into "10" and encodes bits with a bit value equal to "0" into "01", or the feature encoding encodes the bits with a bit value equal to "1" into "01" and encodes bits with a bit value equal to "0" into "10"; and the number of repetition of the bit repetition is related to the number of symbols comprised in the first symbol sequence.

As one embodiment, an identity of the first node device is used for determining a first occasion, and whether the target wake-up signal carries an indication of a device group to which the first node device belongs is used for determining whether to monitor the first signaling in the first occasion; and the target wake-up signal is earlier than the first occasion in a time domain.

As one embodiment, the first transceiver 1201 sends a second information block, wherein the second information block is used for indicating at least one band, and the first node device supports reception of a wake-up signal on each band indicated by the second information block.

As one embodiment, the first receiver 1202 determines whether to monitor second signaling, wherein the second signaling is used for indicating whether to monitor the first signaling; and the target wake-up signal is used for determining whether to monitor the second signaling.

As one embodiment, the target wake-up signal is one of W1 wake-up signals, and the number of wake-up signals carrying a device group comprising the first node device in the W1 wake-up signals is used for determining whether to monitor the first signaling, and the W1 is a positive integer greater than 1.

**Embodiment 13**

Embodiment 13 illustrates a structural block diagram of a processing apparatus in a second node device of one embodiment, as shown in FIG. 13. In FIG. 13, a processing apparatus 1300 of the second node device comprises a second transceiver 1301 and a first transmitter 1302. The second transceiver 1301 comprises a transmitting device/receiving device 416 (comprising an antenna 460), a receiving processor 412, a transmitting processor 415, and a controller/processor 440 in FIG. 4 of the present application; the first transmitter 1302 comprises a transmitting device/receiving device 416 (comprising an antenna 460), a transmitting processor, 415 and a controller/processor 440 in FIG. 4 of the present application;.

In Embodiment 13, the second transceiver 1301 sends a first information block; the first transmitter 1302 sends a target wake-up signal, the target wake-up signal is used for determining whether to monitor first signaling, the first information block is used for determining a time-frequency resource occupied by the target wake-up signal, and the first signaling carries control information, wherein the target wake-up signal carries a first bit block, and the first bit block comprises at least one bit; the first bit block is used for generating a first bit sequence, and the first bit sequence comprises a plurality of sequentially indexed bits; a first feature sequence is a sequence comprising a plurality of sequentially indexed numerical values, and products of the plurality of bits comprised in the first bit sequence and corresponding numerical values in the first feature sequence are used for generating a first symbol sequence; and the number of symbols comprised in the first symbol sequence is related to the number of time-frequency resources occupied by the target wake-up signal, and the first symbol sequence is subjected to at least transform precoding so as to be used for generating the target wake-up signal.

As one embodiment, bits in the first bit sequence and numerical values in the first feature sequence are in one-to-one correspondence, or bits in the first bit sequence with a bit value equal to "1" and the numerical values in the first feature sequence are in one-to-one correspondence.

As one embodiment, the first bit block is subjected to at least feature encoding and bit repetition so as to be used for generating the first bit sequence; the feature encoding encodes bits with the bit value equal to "1" into "10" and encodes bits with a bit value equal to "0" into "01", or the feature encoding encodes the bits with a bit value equal to "1" into "01" and encodes bits with a bit value equal to "0" into "10"; and the number of repetition of the bit repetition is related to the number of symbols comprised in the first symbol sequence.

As one embodiment, an identity of a monitor of the target wake-up signal is used for determining a first occasion, and whether the target wake-up signal carries an indication of a device group to which the monitor of the target wake-up signal belongs is used for determining whether to monitor the first signaling in the first occasion; and the target wake-up signal is earlier than the first occasion in a time domain.

As one embodiment, the second transceiver 1301 receives a second information block, wherein the second information block is used for indicating at least one band, and a monitor of the target wake-up signal supports reception of a wake-up signal on each band indicated by the second information block.

As one embodiment, the first transmitter 1302 sends second signaling, wherein the second signaling is used for indicating whether to monitor the first signaling; and the target wake-up signal is used for determining whether to monitor the second signaling.

As one embodiment, the target wake-up signal is one of W1 wake-up signals, and the number of wake-up signals of a device group carrying a monitor comprising the target wake-up signal in the W1 wake-up signals is used for determining whether to monitor the first signaling, and the W1 is a positive integer greater than 1.

Those ordinarily skilled in the art can understand that all or part of the steps in the above method can be completed by instructing relevant hardware through a program, and the program can be stored in a computer-readable storage medium, such as a read-only memory, a hard disk or an optical disk, etc. Optionally, all or part of the steps in the above embodiment can also be implemented using one or more integrated circuits. Accordingly, each module unit in the above embodiment can be implemented in the form of hardware or in the form of a software function module. The present application is not limited to any specific form of software and hardware combination. The first node device or the second node device or UE or the terminal in the present application includes but is not limited to mobile phones, tablet computers, notebook computers, network access cards, low-power devices, eMTC devices, NB-IoT devices, vehicle-mounted communication devices, aircrafts, airplanes, drones, remote-controlled aircrafts and other wireless communication devices. The base station device or base station or network side device in the present application includes but is not limited to macrocell base stations, microcell base stations, home base stations, relay base stations, eNB, gNB, transmitter receiver points TRPs, relay satellites, satellite base stations, aerial base stations and other wireless communication devices.

Those skilled in the art should understand that the present invention can be implemented in other specified forms without departing from its core or basic features. Therefore, the embodiments disclosed at present should be regarded as descriptive rather than restrictive in any way. The scope of the present invention is determined by the appended claims rather than the preceding description, and all changes within their equivalent meanings and areas are deemed to be included therein.

**Claims**

1. A first node device in wireless communications, comprising:

   a first transceiver for receiving a first information block; and
   a first receiver for monitoring a target wake-up signal, the target wake-up signal being used for determining whether to monitor first signaling, the first information block being used for determining a time-frequency resource occupied by the target wake-up signal, and the first signaling carrying control information;
   wherein the target wake-up signal carries a first bit block, and the first bit block comprises at least one bit; the first bit block is used for generating a first bit sequence, and the first bit sequence comprises a plurality of sequentially indexed bits; a first feature sequence is a sequence comprising a plurality of sequentially indexed numerical values, and products of a plurality of bits comprised in the first bit sequence and corresponding numerical values in the first feature sequence are used for generating a first symbol sequence; and the number of symbols comprised in the first symbol sequence is related to the number of time-frequency resources occupied by the target wake-up signal, and the first symbol sequence is subjected to at least transform precoding so as to be used for generating the target wake-up signal.

2. The first node device according to claim 1, wherein bits in the first bit sequence and numerical values in the first feature sequence are in one-to-one correspondence, or bits with a bit value equal to "1" in the first bit sequence and numerical values in the first feature sequence are in one-to-one correspondence.

3. The first node device according to claim 1 or 2, wherein the first bit block is subjected to at least feature encoding and bit repetition so as to be used for generating the first bit sequence; the feature coding encodes the bits with the bit value equal to "1" into "10" and encodes bits with a bit value equal to "0" into "01", or the feature encoding encodes the bits with the bit value equal to "1" into "01" and encodes the bits with the bit value equal to "0" into "10"; and the number of repetition of the bit repetition is related to the number of symbols comprised in the first symbol sequence.

4. The first node device according to any one of claims 1 to 3, wherein an identity of the first node device is used for determining a first occasion, and whether the target wake-up signal carries an indication of a device group to which the first node device belongs is used for determining whether to monitor the first signaling in the first occasion; and the target wake-up signal is earlier than the first occasion in a time domain.

5. The first node device according to any one of claims 1 to 4, wherein the first transceiver sends a second information block, wherein the second information block is used for indicating at least one band, and the first node device supports reception of a wake-up signal on each band indicated by the second information block.

6. The first node device according to any one of claims 1 to 5, wherein the first receiver determines whether to monitor second signaling, wherein the second signaling is used for indicating whether to monitor the first signaling; and the target wake-up signal is used for determining whether to monitor the second signaling.

7. The first node device according to any one of claims 1 to 6, wherein the target wake-up signal is one of W1 wake-up signals, the number of wake-up signals carrying a device group comprising the first node device in the W1 wake-up signals is used for determining whether to monitor the first signaling, and W1 is a positive integer greater than 1.

8. A second node device in wireless communications, comprising:

a second transceiver for sending a first information block; and

a first transmitter for sending a target wake-up signal, the target wake-up signal being used for determining whether to monitor first signaling, the first information block being used for determining a time-frequency resource occupied by the target wake-up signal, and the first signaling carrying control information;

wherein the target wake-up signal carries a first bit block, and the first bit block comprises at least one bit; the first bit block is used for generating a first bit sequence, and the first bit sequence comprises a plurality of sequentially indexed bits; a first feature sequence is a sequence comprising a plurality of sequentially indexed numerical values, and products of a plurality of bits comprised in the first bit sequence and corresponding numerical values in the first feature sequence are used for generating a first symbol sequence; and the number of symbols comprised in the first symbol sequence is related to the number of time-frequency resources occupied by the target wake-up signal, and the first symbol sequence is subjected to at least transform precoding so as to be used for generating the target wake-up signal.

9. A method for a first node in wireless communications, comprising:

receiving a first information block; and

monitoring a target wake-up signal, the target wake-up signal being used for determining whether to monitor first signaling, the first information block being used for determining a time-frequency resource occupied by the target wake-up signal, and the first signaling carrying control information;

wherein the target wake-up signal carries a first bit block, and the first bit block comprises at least one bit; the first bit block is used for generating a first bit sequence, and the first bit sequence comprises a plurality of sequentially indexed bits; a first feature sequence is a sequence comprising a plurality of sequentially indexed numerical values, and products of a plurality of bits comprised in the first bit sequence and corresponding numerical values in the first feature sequence are used for generating a first symbol sequence; and the number of symbols comprised in the first symbol sequence is related to the number of time-frequency resources occupied by the target wake-up signal, and the first symbol sequence is subjected to at least transform precoding so as to be used for generating the target wake-up signal.

10. A method for a second node in wireless communications, comprising:

sending a first information block; and

sending a target wake-up signal, the target wake-up signal being used for determining whether to monitor first signaling, the first information block being used for determining a time-frequency resource occupied by the target wake-up signal, and the first signaling carrying control information;

wherein the target wake-up signal carries a first bit block, and the first bit block comprises at least one bit; the first bit block is used for generating a first bit sequence, and the first bit sequence comprises a plurality of sequentially indexed bits; a first feature sequence is a sequence comprising a plurality of sequentially indexed numerical values, and products of a plurality of bits comprised in the first bit sequence and corresponding numerical values in the first feature sequence are used for generating a first symbol sequence; and the number of symbols comprised in the first symbol sequence is related to the number of time-frequency resources occupied by the target wake-up signal, and the first symbol sequence is subjected to at least transform precoding so as to be used for generating the target wake-up signal.

100

| Receive a first information block | —101 |

↓

| Detect a target wake-up signal | —102 |

Fig. 1

5GS/EPS 200

HSS/UDM — 220

NR-RAN/EUTRAN **202**

UE — 201

NR/evolved node B — 203

MME/AMF/SMF — 211

Other MME/AMF/SMF — 214

UE — 241

Other NR/evolved node B — 204

S-GW/UPF — 212

P-GW/UPF — 213

Internet service — 230

5GC/EPC **210**

Fig. 2

Control plane **300**

| L3 | RRC — 306 |
| 305 | PDCP — 304 |
| L2 | RLC — 303 |
| | MAC — 302 |
| L1 | PHY — 301 |

User plane **350**

| | SDAP — 356 |
| 355 | PDCP — 354 |
| L2 | RLC — 353 |
| | MAC — 352 |
| L1 | PHY — 351 |

Fig. 3

400                                         450

420                    460

415                416      456      455

Transmitting processor

Transmitting device / Receiving device — 416

Transmitting device / Receiving device — 456

Transmitting processor

440                                         490

Controller/processor

420      460

Controller/processor

Memory — 430

Receiving processor — 412

Transmitting device / Receiving device — 416

Transmitting device / Receiving device — 456

Receiving processor — 452

Memory — 480

Fig. 4

```
┌─────────────────────────┐              ┌─────────────────────────┐
│   N500. Second node     │              │    U550. First node     │
└─────────────────────────┘              └─────────────────────────┘
            │                            ┌─────────────────────────┐
            │                            │ S551. Send a second     │
            │          Second            │ information block       │
            │◄─────information block──────└─────────────────────────┘
┌─────────────────────────┐                          │
│ S501. Receive the second│                          │
│ information block        │                          │
└─────────────────────────┘                          │
┌─────────────────────────┐      First information    │
│ S502. Send a first      │──────────block───────────►│
│ information block        │                          │
└─────────────────────────┘              ┌─────────────────────────┐
            │                            │ S552. Receive the first │
            │                            │ information block        │
┌─────────────────────────┐              └─────────────────────────┘
│ S503. Send a target     │      Target wake-up        │
│ wake-up signal           │──────────signal──────────►│
└─────────────────────────┘              ┌─────────────────────────┐
            │                            │ S553. Monitor the target│
            │                            │ wake-up signal           │
┌─────────────────────────┐              └─────────────────────────┘
│ S504. Send first        │                          │
│ signaling                │────First signaling───────►│
└─────────────────────────┘              ┌─────────────────────────┐
            │                            │ S554. Monitor the first │
            │                            │ signaling                │
            ▼                            └─────────────────────────┘
        ╭─────────╮                               ▼
        │   End   │                          ╭─────────╮
        ╰─────────╯                          │   End   │
                                             ╰─────────╯
```

Fig. 5

```
┌─────────────────────────┐              ┌─────────────────────────┐
│   N600. Second node     │              │    U650. First node     │
└─────────────────────────┘              └─────────────────────────┘
            │                            ┌─────────────────────────┐
            │                            │ S651. Send a second     │
            │       Second information   │ information block       │
            │◄──────────block────────────└─────────────────────────┘
┌─────────────────────────┐                          │
│ S601. Receive the second│                          │
│ information block        │                          │
└─────────────────────────┘                          │
┌─────────────────────────┐     First information     │
│ S602．Send a first      │──────────block───────────►│
│ information block        │              ┌─────────────────────────┐
└─────────────────────────┘              │ S652. Receive the first │
            │                            │ information block        │
            │                            └─────────────────────────┘
            │                            ┌─────────────────────────┐
            │                            │ S653. Monitor a target  │
            │                            │ wake-up signal           │
            │                            └─────────────────────────┘
            ▼                                     ▼
        ╭─────────╮                          ╭─────────╮
        │   End   │                          │   End   │
        ╰─────────╯                          ╰─────────╯
```

Fig. 6

**Method A**

| 0 | 1 | 0 | 1 | 1 | 0 | 0 | 1 | 1 | 0 | ······ | 0 | 1 | 1 | 0 |

**Method B**

| 0 | 1 | 0 | 1 | 1 | 0 | 0 | 1 | 1 | 0 | ······ | 0 | 1 | 1 | 0 |

Fig. 7

**First bit block** | 0 | 1 | 0 | 1 | ······ | 0 | 1 |

Feature coding

| 0 | 1 | 1 | 0 | 0 | 1 | 1 | 0 | ······ | 0 | 1 | 1 | 0 |

Bit repetition

**First bit sequence** | 0 | 0 | 0 | 0 | 1 | 1 | 1 | 1 | 1 | 1 | 1 | 1 | 0 | 0 | 0 | 0 | 0 | 0 | 0 | 0 | 1 | 1 | 1 | 1 | 1 | 1 | 1 | 1 | 0 | 0 | 0 | 0 | ······ | 0 | 0 | 0 | 0 | 1 | 1 | 1 | 1 | 1 | 1 | 1 | 1 | 0 | 0 | 0 | 0 |

**Method A**

**First bit block** | 0 | 1 | 0 | 1 | ······ | 0 | 1 |

Bit repetition

| 0 | 0 | 0 | 0 | 1 | 1 | 1 | 1 | 0 | 0 | 0 | 0 | 1 | 1 | 1 | 1 | ······ | 0 | 0 | 0 | 0 | 1 | 1 | 1 | 1 |

Feature coding

**First bit sequence** | 0 | 1 | 0 | 1 | 0 | 1 | 0 | 1 | 1 | 0 | 1 | 0 | 1 | 0 | 1 | 0 | 1 | 0 | 0 | 1 | 0 | 1 | 0 | 1 | 0 | 1 | 1 | 0 | 1 | 0 | 1 | 0 | 1 | 0 | ······ | 0 | 1 | 0 | 1 | 0 | 1 | 0 | 1 | 1 | 0 | 1 | 0 | 1 | 0 | 1 | 0 |

**Method B**

Fig. 8

Time

Fig. 9

Time

Fig. 10

1101 — Start

1102 — Whether W1 wake-up signals are all detected? — No → 1103 Abandon monitoring first signaling

Yes ↓

1104 — Whether the W1 wake-up signals carry a device group comprising a first node? — No → 1103 Abandon monitoring first signaling

Yes ↓

1105 — Monitor the first signaling

Fig. 11

1200

First node device

First transceiver 1201

First receiver 1202

Fig. 12

1300

Second node device

Second transceiver 1301

First transmitter 1302

Fig. 13

## INTERNATIONAL SEARCH REPORT

| International application No. |
|---|
| **PCT/CN2024/072311** |

| A. | CLASSIFICATION OF SUBJECT MATTER |
|---|---|

H04W52/02(2009.01)i

According to International Patent Classification (IPC) or to both national classification and IPC

| B. | FIELDS SEARCHED |
|---|---|

Minimum documentation searched (classification system followed by classification symbols)

IPC:H04W,H04L

Documentation searched other than minimum documentation to the extent that such documents are included in the fields searched

Electronic data base consulted during the international search (name of data base and, where practicable, search terms used)

CNTXT, VEN, ENTXT, CNKI: 唤醒, 检测, 监测, 节能, 比特, 序列, 乘积, wake 1w up, detect+, monitor+, power 1w sav+, bit, sequence, product

| C. | DOCUMENTS CONSIDERED TO BE RELEVANT |
|---|---|

| Category* | Citation of document, with indication, where appropriate, of the relevant passages | Relevant to claim No. |
|---|---|---|
| A | CN 111770561 A (SHANGHAI LANGBO COMMUNICATION TECHNOLOGY CO., LTD.) 13 October 2020 (2020-10-13) description, paragraphs [0086]-[0100] | 1-10 |
| A | CN 107969029 A (HUAWEI TECHNOLOGIES CO., LTD.) 27 April 2018 (2018-04-27) description, paragraphs [0046]-[0116] | 1-10 |
| A | CN 112544109 A (LG ELECTRONICS INC.) 23 March 2021 (2021-03-23) entire document | 1-10 |
| A | CN 112956256 A (HUAWEI TECHNOLOGIES CO., LTD.) 11 June 2021 (2021-06-11) entire document | 1-10 |
| A | CN 113498075 A (SHANGHAI LANGBO COMMUNICATION TECHNOLOGY CO., LTD.) 12 October 2021 (2021-10-12) entire document | 1-10 |
| A | CN 113748719 A (QUALCOMM INC.) 03 December 2021 (2021-12-03) entire document | 1-10 |

☑ Further documents are listed in the continuation of Box C.  ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
|---|---|
| **26 March 2024** | **10 April 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| | International application No. |
|---|---|
| | **PCT/CN2024/072311** |

| C. | DOCUMENTS CONSIDERED TO BE RELEVANT | |
|---|---|---|
| Category* | Citation of document, with indication, where appropriate, of the relevant passages | Relevant to claim No. |
| A | US 2021153120 A1 (SONY CORP.) 20 May 2021 (2021-05-20)<br>entire document | 1-10 |
| A | INTEL CORP. "Wake-up signal for efeMTC"<br>*3GPP TSG RAN WG1 Meeting #90, R1-1712498*, 12 August 2017 (2017-08-12),<br>entire document | 1-10 |

Form PCT/ISA/210 (second sheet) (July 2022)

**INTERNATIONAL SEARCH REPORT**
Information on patent family members

International application No.

**PCT/CN2024/072311**

| Patent document cited in search report | | | Publication date (day/month/year) | Patent family member(s) | | | Publication date (day/month/year) |
|---|---|---|---|---|---|---|---|
| CN | 111770561 | A | 13 October 2020 | None | | | |
| CN | 107969029 | A | 27 April 2018 | WO | 2018072692 | A1 | 26 April 2018 |
| | | | | EP | 3522621 | A1 | 07 August 2019 |
| | | | | EP | 3522621 | A4 | 20 November 2019 |
| | | | | EP | 3522621 | B1 | 07 April 2021 |
| CN | 112544109 | A | 23 March 2021 | WO | 2020032746 | A1 | 13 February 2020 |
| | | | | DE | 112019003995 | T5 | 29 April 2021 |
| | | | | US | 2021297987 | A1 | 23 September 2021 |
| | | | | US | 11438871 | B2 | 06 September 2022 |
| CN | 112956256 | A | 11 June 2021 | None | | | |
| CN | 113498075 | A | 12 October 2021 | None | | | |
| CN | 113748719 | A | 03 December 2021 | US | 2020351776 | A1 | 05 November 2020 |
| | | | | US | 11356946 | B2 | 07 June 2022 |
| | | | | WO | 2020223369 | A1 | 05 November 2020 |
| | | | | EP | 3963957 | A1 | 09 March 2022 |
| US | 2021153120 | A1 | 20 May 2021 | US | 11412451 | B2 | 09 August 2022 |
| | | | | EP | 3665882 | A1 | 17 June 2020 |
| | | | | EP | 3665882 | B1 | 28 February 2024 |
| | | | | WO | 2019030337 | A1 | 14 February 2019 |

Form PCT/ISA/210 (patent family annex) (July 2022)